# EUROPEAN PATENT APPLICATION

(11) **EP 4 614 196 A1**
(43) Date of publication of application: **10.09.2025**
(21) Application number: 23885664.5
(22) Date of filing: 27.10.2023
(51) Int. Cl.: G02B 1/111, B05D 1/36, B05D 5/06, B32B 5/18, B32B 7/023, B32B 9/00, C08F 22/40, C08G 73/10

(54) **MEMBER HAVING OPTICAL INTERFERENCE LAYER, AND OPTICAL DEVICE**

(30) Priority: 31.10.2022 JP 2022174677; 31.10.2022 JP 2022174676; 12.10.2023 JP 2023176912
(71) Applicant: CANON KABUSHIKI KAISHA, Tokyo 146-8501 (JP)
(72) Inventor: YAMAMOTO Shuhei, Tokyo 146-8501 (JP); OUCHI Shun, Tokyo 146-8501 (JP)
(74) Representative: TBK
(86) International application number: PCT/JP2023/038832
(87) International publication number: WO 2024/095908

(57) **Abstract**

A member includes a substrate and an optical interference layer provided on at least one main surface side of the substrate and constituted by at least two layers, wherein the optical interference layer includes a first layer and a porous layer containing particles of an inorganic compound in this order from the substrate side.

## Description

### Technical Field

The present invention relates to a member having an optical interference layer and an optical apparatus thereof.

### Background Art

To suppress reflection at an optical input/output interface, a member provided with an antireflection film is widely used. Patent Literature 1 discloses an optical interference layer that includes an inorganic underlayer formed of an inorganic material, a surface modification layer containing silicon oxide, an adhesive layer formed of an acrylic resin, a poly(methyl methacrylate) resin, or the like, and a low-refractive-index layer containing hollow silica particles bound by a binder.

### Citation List

### Patent Literature

PTL 1: Japanese Patent Laid-Open No. 2015-222450

### Summary of Invention

### Technical Problem

In Patent Literature 1, the inorganic underlayer and the surface modification layer are formed by a vacuum film formation method, such as a vacuum deposition method or a sputtering method, and the adhesive layer and the low-refractive-index layer are formed by a coating method.

Many optical members have a curved main surface, and a film formed by a vacuum film formation method tends to have a smaller thickness at the periphery of the curved surface than in the central portion of the curved surface. On the other hand, a film formed by a coating method tends to have a larger thickness at the periphery of the curved surface than in the central portion of the curved surface. Thus, when a film is formed to satisfy an optical design for suppressing reflection in the central portion of a curved surface of an optical member, the peripheral portion has a larger deviation from the optical design and cannot sufficiently suppress the reflection. In particular, a curved surface with a large half-opening angle of 30 degrees or more has a very large difference in the antireflection effect depending on the position, which also affects the appearance.

The present invention has been made in view of such a background and provides a member with high antireflection performance regardless of the substrate shape.

### Solution to Problem

A member that solves the above problems includes a substrate and an optical interference layer provided on at least one main surface side of the substrate and constituted by at least two layers, wherein the optical interference layer includes a first layer and a porous layer containing particles of an inorganic compound in this order from the substrate side.

### Advantageous Effects of Invention

The present invention can provide a member with a good antireflection function.

### Brief Description of Drawings

[Fig. 1A] Fig. 1A is a schematic view of a cross-sectional configuration example of a member according to the present invention.
[Fig. 1B] Fig. 1B is a schematic enlarged view of a second layer 22.
[Fig. 2A] Fig. 2A is a schematic view of a cross-sectional configuration example of a member produced by continuously applying a coating liquid for each layer.
[Fig. 2B] Fig. 2B is a schematic enlarged view of the interface between the second layer 22 and a first layer 21.
[Fig. 3] Fig. 3 is a cross-sectional view of an optical element that is an embodiment of a member according to the present invention.
[Fig. 4] Fig. 4 is a schematic view of an imaging apparatus as an example of an optical apparatus including an article according to the present invention.
[Fig. 5A] Fig. 5A is a schematic view of a cross-sectional configuration of a member according to a second embodiment.
[Fig. 5B] Fig. 5B is a partially enlarged schematic view of a third layer.
[Fig. 6A] Fig. 6A is a schematic view of a cross-sectional configuration of the member according to the second embodiment, in which a coating liquid is continuously applied without curing to form three layers.
[Fig. 6B] Fig. 6B is an enlarged schematic view of a region A in Fig. 6A.
[Fig. 6C] Fig. 6C is an enlarged schematic view of a region B in Fig. 6A.
[Fig. 7] Fig. 7 is a schematic view of a cross-sectional configuration of a member according to a third embodiment.
[Fig. 8A] Fig. 8A is a schematic view of a cross-sectional configuration of the member according to the second embodiment, in which a coating liquid is continuously applied without curing to form three layers.
[Fig. 8B] Fig. 8B is an enlarged schematic view of a region A in Fig. 8A.
[Fig. 8C] Fig. 8C is an enlarged schematic view of a region B in Fig. 8AT
[Fig. 9] Fig. 9 is a schematic view of a member according to a fourth embodiment.
[Fig. 10] Fig. 10 is a schematic view of a modification example of the fourth embodiment.

### Description of Embodiments

Embodiments of the present invention are described below with reference to the accompanying drawings. Like reference numerals denote like parts in the following description and drawings.

A common part is sometimes described with reference to a plurality of drawings without notice. A part with a common reference numeral may not be described again.

### [First Embodiment]

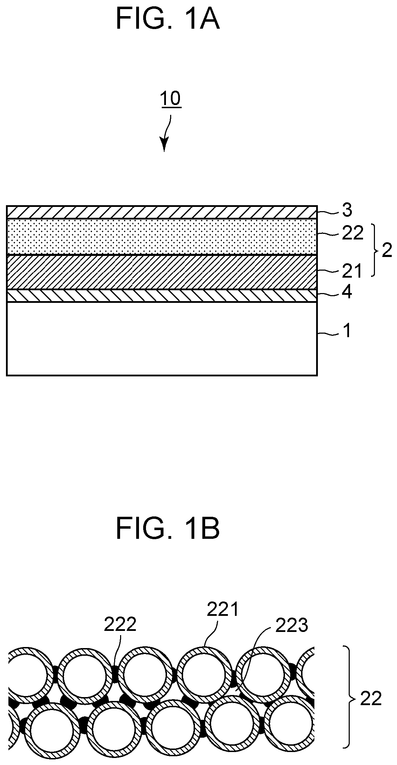

Fig. 1A is a schematic cross-sectional view of an embodiment of a layer configuration of a member according to the present invention. In the figure, a member 10 has a substrate 1 and an optical interference layer 2 composed of two layers on the substrate 1. The optical interference layer 2 includes a first layer 21 and a second layer 22 in this order from the substrate 1 side and prevents reflection by optical coherence by the first layer 21 and the second layer 22**.** The member 10 may include, in addition to the optical interference layer 2, a functional layer 3, an underlying layer 4, and the like that do not contribute to optical coherence.

The second layer 22 is a porous layer containing particles of an inorganic compound. The second layer 22 in contact with air has a low refractive index and therefore increases the degree of freedom of optical interference design for producing an antireflection effect.

The first layer 21 and the second layer 22 are formed by a coating method. Thus, the thickness of each layer tends to increase from the central portion to the periphery of the substrate 1. A combination of films with the same tendency of increase and decrease in thickness can have a smaller deviation from the optical design value than a combination of films with opposite tendencies of increase and decrease in thickness. Consequently, regardless of the shape of the surface of the member on which the optical interference layer is provided, a high antireflection effect can be produced on the entire surface.

The refractive index and the thickness of the first layer 21 and the second layer 22 formed by the coating method can be easily adjusted by a coating liquid or coating conditions to be used. For example, when the material quality (refractive index) of the substrate 1 is changed after a coating liquid for forming the second layer 22 is determined, an optical interference layer that reduces reflection can be formed by adjusting a coating liquid and coating conditions for forming the first layer 21 to achieve a refractive index and a thickness satisfying the optical design. As described above, a member according to the present invention can easily adapt to the change in the shape and material of the substrate 1 and has improved productivity.

The member 10 of the present invention can have high antireflection performance regardless of the curvature or diameter of the substrate 1 and can therefore be used as an optical element, such as an optical lens, an optical mirror, a filter, or an optical film. In particular, it is suitable for an optical lens required to have high antireflection performance and can be used for various optical apparatuses. In particular, it is suitable for an optical lens incorporated in an imaging optical system included in an imaging apparatus. When a member according to the present invention is used in an imaging optical system, the reflection of light on the surface of the member is suppressed before light from the outside forms an image on an imaging element through the imaging optical system, thereby improving light transmittance and greatly reducing flare and ghost. This can result in a high-quality image.

Each constituent element of the member 10 and then a method for producing a member are described below.

### <Member>

### [Substrate]

The optical interference layer 2 of the present invention can have high antireflection performance for various substrates 1 by adjusting the refractive index and/or the thickness of each of the first layer 21 and the second layer 22. Thus, any material, such as glass, ceramic, resin, metal, or semiconductor, can be used as a material of the substrate 1. It may have any shape and may be a flat sheet, a curved shape with a concave surface or a convex surface, a film, or the like. Depending on the intended use, a light-transmitting substrate may be used.

A composition of glass or ceramic may be zirconium oxide, titanium oxide, tantalum oxide, niobium oxide, hafnium oxide, lanthanum oxide, gadolinium oxide, silicon oxide, calcium oxide, barium oxide, sodium oxide, potassium oxide, boron oxide, aluminum oxide, or the like. The substrate can be produced by grinding and polishing, mold forming, float forming, or another method.

The resin is preferably a thermoplastic resin or a thermosetting resin. The thermoplastic resin may be poly(ethylene terephthalate), poly(ethylene naphthalate) (PET), polypropylene (PP), poly(methyl methacrylate) (PMMA, acrylic resin), cellulose triacetate, polycarbonate (PC), a cycloolefin polymer, poly(vinyl alcohol), or the like. The thermosetting resin may be a polyimide, an epoxy resin, a urethane resin, or the like.

The metal may be a metal composed of one metal element or an alloy containing two or more metal elements.

The semiconductor may be an elemental semiconductor, such as silicon or germanium, gallium phosphide, indium phosphide, or the like.

### [Optical Interference Layer]

Each of the two layers constituting the optical interference layer is described below. First, the second layer on the air side (on the side away from the substrate 1) of the two layers is described, and then the first layer is described.

### (Second Layer)

The second layer 22 is a porous layer containing particles of an inorganic compound and preferably has a refractive index of 1.23 or less. The second layer 22 with a refractive index of 1.23 or less can have a smaller difference in refractive index from air, allowing an optical design that can produce a high antireflection effect by optical coherence of a small number of layers, such as two layers.

Although the second layer 22 preferably has a refractive index n2 of more than 1.00 and 1.23 or less, considering that it is technically difficult to form a film with a refractive index n2 of less than 1.10, the actual refractive index n2 is 1.10 or more and 1.23 or less, preferably 1.10 or more and 1.21 or less, more preferably 1.15 or more and 1.20 or less. A refractive index n2 of 1.10 or more and 1.20 or less results in a wider range of materials for the substrate 1 that can reduce reflection by the optical design of two layers. A refractive index n2 of 1.15 or more and 1.20 or less can result in the optical interference layer 2 with high antireflection characteristics and mechanical strength, which widens the application of the member 10.

Although the thickness of the second layer 22 is designed based on the refractive index n1 of the first layer 21 and the wavelength of light to be prevented from being reflected, in consideration of the preferred range of the refractive index n2, the thickness is preferably 50 nm or more and 300 nm or less, more preferably 70 nm or more and 200 nm or less, still more preferably 90 nm or more and 150 nm or less, because a high antireflection effect is produced.

As illustrated in Fig. 1A, the second layer 22 is a porous layer containing a plurality of particles 221 bound together by a binder 222 and voids 223 present between the particles. The refractive index n2 can be adjusted by the materials of the particles 221 and the binder 222 contained in the second layer 22 and by the amount of the voids 223 (porosity). The porosity can be adjusted by the size and shape of the particles and the amount of the binder 222.

The particles 221 can be particles of an inorganic compound with a refractive index of less than 1.5 in at least part of the visible light region. More specifically, particles of silicon oxide (silica), magnesium fluoride, lithium fluoride, calcium fluoride, barium fluoride, or the like are preferred, and silica particles are particularly preferred in consideration of availability. The composition of the particles 221 can be determined by analyzing a cross section of the layer using energy dispersive X-ray analysis (EDX).

Although the particles 221 may be hollow particles with internal voids, chain-like particles, solid particles, or the like, hollow particles and chain-like particles are preferred from the perspective of easily increasing the porosity of the layer. Since the second layer 22 preferably has a refractive index as low as possible, hollow particles are particularly preferred because a layer with a higher porosity is easily formed. The chain-like particles refer to secondary particles in which a plurality of primary particles, such as solid particles, are bound and connected in a straight line or in a bent manner.

When the particles 221 are hollow particles, the hollow particles preferably have an average particle size of 15 nm or more and 300 nm or less, more preferably 30 nm or more and 100 nm or less, still more preferably 30 nm or more and 80 nm or less. Particles with an average particle size of 15 nm or more and 300 nm or less can be consistently produced and are less likely to cause scattering due to the formation of large voids between the particles.

The average particle size of the hollow particles is the Feret diameter. The Feret diameter can be measured from an image (cross-sectional TEM image) obtained by imaging a cross section of the second layer 22 with a transmission electron microscope. The Feret diameter of at least 50 particles can be measured by using commercially available image-processing software, such as Image J (manufactured by NIH), and by adjusting the contrast of the TEM image as required to calculate the average value thereof as the average particle size.

The shell thickness of the hollow particles is preferably 10% or more and 50% or less, more preferably 20% or more and 35% or less, of the average particle size. Particles with a shell thickness in this range are less likely to break during film formation due to insufficient particle strength, the proportion of voids in each particle decreases, and the effect of lowering the refractive index is less likely to decrease. The shell thickness of the hollow particles can also be measured from a cross-sectional TEM image. The shell thicknesses of a plurality of particles can be measured to determine the average value thereof.

When the particles 221 are chain-like particles, the primary particles constituting each chain-like particle may have a spherical shape, a cocoon shape, or a barrel shape, and the long diameter of the particles is particularly preferably 1 time or more and 3 times or less the short diameter thereof. The thickness of each chain-like particle corresponds to the average particle size of the primary particles, and the average particle size can be determined by measuring the Feret diameters of at least 50 primary particles in a cross-sectional TEM image and averaging the Feret diameters.

The average particle size of the primary particles constituting each chain-like particle is preferably 8 nm or more and 20 nm or less. There is no risk that an average particle size of 8 nm or more and 20 nm or less results in an increase in the surface area of the voids, uptake of moisture or chemical substances from the atmosphere, or a change in the optical characteristics of the second layer 22**.** Furthermore, there is no concern that the average particle size becomes too large, the dispersion of the chain-like particles in a coating liquid for forming the second layer 22 becomes unstable, the coatability deteriorates, and a layer with uniform physical properties cannot be formed.

The average particle size of the chain-like particles is preferably 3 times or more and 10 times or less, more preferably 4 times or more and 8 times or less, the average particle size of the primary particles. When the average particle size of the chain-like particles is 3 times or more and 10 times or less the average particle size of the primary particles, the porosity is sufficient to adequately reduce the refractive index of the porous layer, and there is no risk of the viscosity of the coating liquid becoming too high. Furthermore, there is no risk that voids formed between particles become large to scatter light and reduce transparency and that the coatability and the leveling property are deteriorated.

The average particle size of the chain-like particles corresponds to the Feret diameter of secondary particles and can be determined by calculating the Feret diameters of at least 50 chain-like particles from a cross-sectional TEM image and averaging the Feret diameters.

When the particles 221 are primary particles of solid particles, the average particle size preferably ranges from 5 nm or more and 300 nm or less, more preferably 5 nm or more and 150 nm or less, still more preferably 5 nm or more and 100 nm or less. When the average particle size is 5 nm or more and 300 nm or less, it is possible to suppress an increase in the refractive index of the second layer 22 and an increase in scattering. The average particle size of solid particles can also be determined from a cross-sectional TEM image of the layer in the same manner as particles of other shapes.

The binder 222 for binding particles together can be an inorganic compound with the same quality as the particles. The use of the inorganic compound with the same quality as the particles 221 can increase the affinity between the materials and produce a strong binding force with a small amount of the inorganic compound. This results in a lower refractive index than in the case of using a resin binder with a low affinity for the particles 221.

When the particles 221 are silica particles, the binder 222 for binding the silica particles together is preferably silica.

The binder 222 content of the second layer 22 is preferably 0.2 parts by mass or more and 20 parts by mass or less, more preferably 1 part by mass or more and 20 parts by mass or less, per 100 parts by mass of the total inorganic components (solid components) in the second layer 22**.** When the binder 222 content is in this range, it is possible to suppress the formation of a film with low scratch resistance due to a small ratio of the binder to the particles or suppress a decrease in porosity and an increase in refractive index due to a high binder content.

### (First Layer)

In the present invention, the refractive index of the first layer 21 is mainly adjusted to match the refractive indices of the substrate 1 and the second layer 22 and achieve high antireflection performance through an optical interference layer composed of two layers.

The material of the first layer 21 may be selected in consideration of optical design based on the refractive indices of the substrate 1 and the second layer 22 and environmental durability and may be a material with a high transmittance in a wavelength region in which reflection is suppressed. A polymer, such as polyimide, acryl, maleimide, or epoxy, is preferred as an organic material, and a metal oxide, such as silica, alumina, or titania, is preferred as an inorganic material.

The first layer 21 preferably has a refractive index n1 of 1.35 or more and 2.10 or less, more preferably 1.40 or more and 1.80 or less. A refractive index n1 of 1.35 or more and 2.10 or less can result in a high antireflection effect by optical coherence.

The thickness of the first layer 21 may be determined by optical design based on the refractive index n1, the wavelength of light to be prevented from being reflected, and the relationship with the second layer 22. The use of a material that satisfies the refractive index range described above can produce a high antireflection effect when the first layer 21 has a thickness of 30 nm or more and 130 nm or less. In consideration of the refractive index and thickness ranges suitable for the second layer 22, the thickness is more preferably 50 nm or more and 100 nm or less.

The configuration in which the first layer 21 is an organic layer is particularly preferred in the present invention in which each layer is formed by a coating method. This is because, even if a coating liquid B for forming the second layer 22 is applied before a coating liquid for forming the first layer 21 has cured, solid components in the respective coating liquids exhibit low affinity for each other and can remain in a separated state. This eliminates the need for a step of curing a coating film every time the coating film is formed from a coating liquid, and the coating step can be continuously performed to improve the production efficiency.

Layers formed by such a continuous coating method can also have high interlayer adhesiveness. Fig**.** 2A illustrates a member produced by continuously applying a coating liquid for each layer, and Fig**.** 2B is a schematic enlarged view of the interface between the second layer 22 and the first layer 21**.** When the coating liquid for forming the first layer 21 is applied to form a coating film, and the coating liquid for forming the second layer 22 is then applied without curing the coating film, some of the particles 221 in the second layer 22 enter the first layer 21**.** Irregularities are formed at the interface between the second layer 22 and the first layer 21 and increase the contact area and enhance the adhesion between the particles 221 and the first layer 21**.** Furthermore, the irregularities can form a pseudo-gradient of the refractive index and suppress the deterioration of oblique-incidence characteristics in a wide-angle portion and the deterioration of the lens appearance due to scattering.

The depth d to which the particles 221 enter the first layer 21 is 2 nm or more and less than 15 nm**.** A depth d of 5 nm or more and less than 15 nm is preferred because the adhesion between the first layer 21 and the second layer 22 can be further enhanced. The entry depth d of the particles 221 can be adjusted by the degree to which the coating liquid for forming the first layer 21 is dried before the coating liquid for forming the second layer 22 is applied.

When the first layer 21 is an organic layer, although a curable resin or a thermoplastic resin may be used, a thermoplastic resin is more preferred from the perspective that the refractive index and the thickness are not changed by the curing conditions and the amount of residual uncured monomer is small. In particular, it is preferable to use a resin with an aromatic ring or an imide ring in the main chain or a polymer with a maleimide copolymer.

The aromatic ring and the imide ring have a planar structure, and molecular chains in an organic layer with such a structure in the main chain tend to be oriented parallel to the substrate during film formation. Thus, a layer with a highly uniform thickness and refractive index can be formed even if the layer has a thickness of 100 nm or less as in an organic layer of the present invention.

A cured resin with an aromatic ring or an imide ring in the main chain may be a cured product of a compound or an oligomer with at least one reactive or polymerizable substituent, such as an epoxy group, an oxetanyl group, an episulfide group, a methylol group, an isocyanate group, a thioisocyanate group, a vinyl ether group, an acryloyl group, a methacryloyl group, or a maleimide group. The cured resin with an aromatic ring or an imide ring in the main chain is, for example, a cured product of bisphenol A epoxy, a cured product of m-phenylene diisocyanate, or a cured product of a methylolmelamine resin, a guanamine resin, or a maleimide resin.

A thermoplastic resin with an aromatic ring or an imide ring in the main chain may be an aromatic polyether, such as poly(ether ketone) or poly(ether sulfone), an aromatic polyester, such as poly(ethylene terephthalate), an aromatic polycarbonate, an aromatic polyurethane, an aromatic polyurea, an aromatic polyamide, a thermoplastic polyimide, or the like. Among these, an aromatic polyether, an aromatic polysulfide, a polycarbonate, or a thermoplastic polyimide is more preferred from the perspective of heat resistance.

The refractive index of the organic layer can be changed by changing the structure of an organic resin. For example, the number of aromatic rings or the number of heterocycles in the organic resin can be increased to increase the refractive index. On the other hand, an increase in the number of aliphatic chains, alicyclic structures, the siloxane structures, fluoroalkyl groups, or the like results in improved transparency and a lower refractive index. Examples of organic resins with an aromatic ring or an imide ring in the main chain, the refractive index of which can be relatively easily changed by the structure, include a polyimide, an aromatic polyether, an aromatic polysulfide, and an aromatic polycarbonate. In these polymers, the above structure can be introduced into the main chain or a side chain together with the aromatic ring or the imide ring via a monomer.

A polymerized maleimide copolymer can form a film with a low refractive index and high solvent resistance while maintaining the characteristics of the maleimide polymer by selecting a monomer to be polymerized with the maleimide.

In the maleimide polymer, the imide ring tends to be oriented parallel to the substrate during thin film formation, which tends to reduce scattering but increase the refractive index.

On the other hand, poly(meth)acrylate, poly(allyl ether), and the like have high processability and a low refractive index and are applied to various optical materials. However, due to low solvent resistance, it is not suitable for a laminate application in which a coating liquid is repeatedly applied. Furthermore, since an ester bond of poly(meth)acrylate is easily hydrolyzed, it is difficult to apply the poly(meth)acrylate to a thin film that is exposed to a high-temperature and high-humidity environment or in which a component is eluted from a glass substrate.

Thus, a maleimide and these monomers can be polymerized to form a thin film of a maleimide copolymer with high solvent resistance and a low refractive index. When the refractive index of the first layer 21 is adjusted to be low, it is particularly preferred to use a maleimide copolymer polymerized with a fluorine acrylic monomer.

The maleimide copolymer used for the first layer 21 preferably has a maleimide copolymerization ratio of 0.3 or more and 0.97 or less. When the maleimide copolymerization ratio is 0.3 or more and 0.97 or less, it is possible to form a low-refractive-index film with a smaller change in reflectance in a high-temperature and high-humidity environment and suppress the occurrence of a problem when the second layer is formed thereon.

The maleimide copolymer preferably has a number-average molecular weight of 3,000 or more and 100,000 or less, more preferably 5,000 or more and 50,000 or less. A number-average molecular weight in the above range results in a film with a smaller strength reduction and makes it easy to adjust the viscosity of the coating liquid for forming the first layer 21 in a suitable range for coating.

To improve the adhesion between the first layer 21 and the substrate, the organic layer also preferably contains a siloxane structure (-SiR₂-O-)ₘ. R is a methyl group or a phenyl group, and m is an integer of 1 or more and 6 or less. The adhesion to the substrate can be improved to suppress film peeling, cracking, or the like particularly under high temperature and high humidity.

When the first layer 21 is an organic layer containing (-SiR₂-O-)ₘ, a repeating unit containing (-SiR₂-O-)ₘ preferably constitutes 30% by mole or less of the total repeating units. 30% by mole or less results in a smaller decrease in heat resistance due to a decrease in glass transition temperature and a smaller decrease in wettability to a glass substrate.

When the first layer 21 is an inorganic compound layer, the inorganic compound layer can be substantially free of voids. The inorganic compound can have a refractive index of 1.60 or less in at least part of the visible light region. More specifically, a metal oxide, a metal fluoride, or a metal nitride is preferred, and an oxide is particularly preferred. More specifically, aluminum oxide, zirconium oxide, silicon oxide, titanium oxide, or zinc oxide is preferred. The composition of the inorganic compound in the first layer 21 can be determined by analyzing a cross section of the first layer 21 using energy dispersive X-ray analysis (EDX).

### (Other Layers)

The member 10 may have another layer that does not affect optical coherence on the main surface. A layer that does not affect optical coherence is not included in the optical interference layer 2**.**

Another layer that does not affect optical coherence has, for example, a configuration including the functional layer 3 on the surface of the second layer 22 opposite the substrate 1 or a configuration including the underlying layer 4 between the substrate 1 and the first layer 21. Such a layer has a thickness of 15 nm or less, which does not affect optical coherence.

The functional layer 3 is a layer for imparting functionality to the member, such as an antifouling layer, a hydrophilic layer, or an adhesive layer. The antifouling layer is preferably a fluoropolymer-containing layer, a fluorosilane monolayer, or a layer containing titanium oxide particles. The hydrophilic layer is preferably a hydrophilic polymer layer, particularly preferably a layer containing a polymer with a zwitterionic hydrophilic group, such as a sulfobetaine group, a carbobetaine group, or a phosphorylcholine group. The adhesive layer desirably has high transmittance after curing and is suitably an acrylic resin, an epoxy resin, or the like.

The underlying layer 4 has an effect of preventing diffusion of impurities from the substrate 1 and increasing the adhesion between the substrate 1 and the first layer 21. The underlying layer 4 may be an inorganic compound, such as an oxide, a nitride, or a fluoride, a polymer layer, or the like.

### <Method for Producing Member>

The method for producing a member includes the following steps.
(1) Step of preparing a substrate
(2) Step of applying a first coating liquid to a substrate to form a first coating film
(3) Step of applying a second coating liquid to the first coating film to form a second coating film
(4) Step of curing the second coating film

Each step is described below.

### (1) Step of preparing substrate

First, the substrate 1 is prepared. If necessary, the substrate 1 may be subjected to solvent cleaning, UV cleaning, or the like.

### (2) Step of applying first coating liquid to substrate to form first coating film

First, a first coating liquid A (hereinafter referred to as a coating liquid A) for forming the first layer is described. In the following, description of the matters already described may be omitted.

### (Coating Liquid A)

The first layer 21 is an organic layer or an inorganic compound layer. A coating liquid is referred to as a coating liquid A1 when the first layer 21 is an organic layer and as a coating liquid A2 when the first layer 21 is an inorganic compound layer, and the coating liquids A1 and A2 are first described below.

The coating liquid A1 for forming the organic layer contains a polymer component constituting the first layer 21 and an organic solvent.

Although the polymer component may be a curable composition or a thermoplastic composition, a thermoplastic composition is particularly preferred from the perspective that the refractive index and the thickness do not change under baking conditions and the amount of residual uncured monomer is small. In particular, a composition with an aromatic ring or an imide ring and a composition containing a maleimide copolymer are preferred.

A polymer component with an aromatic ring or an imide ring may be, as an example of a curable composition, bisphenol A epoxy, m-phenylene diisocyanate, a methylolmelamine resin, a guanamine resin, a maleimide resin, or the like. A composition of a thermoplastic resin is, for example, an aromatic polyether, such as poly(ether ketone) or poly(ether sulfone), an aromatic polyester, such as poly(ethylene terephthalate), an aromatic polycarbonate, an aromatic polyurethane, an aromatic polyurea, an aromatic polyamide, a thermoplastic polyimide, or the like. Among these, an aromatic polyether, an aromatic polysulfide, a polycarbonate, or a thermoplastic polyimide is more preferred from the perspective of heat resistance.

The composition containing a maleimide copolymer can be synthesized by addition polymerization of a maleimide monomer and another monomer in a solution in the presence of a polymerization initiator. From the perspective of polymerizability, a monomer suitable for copolymerization with a maleimide is an acrylate or a methacrylate. In particular, from the perspective of the coatability of the polymer, the refractive index, and the adhesiveness to the substrate 1, methyl acrylate, 2,2,2-trifluoroethyl acrylate, 3-(acryloyloxy)propyltrimethoxysilane, methyl methacrylate, 2,2,2-trifluoroethyl methacrylate, and 3-(methacryloyloxy)propyltrimethoxysilane are preferred. These monomers may be used alone or in combination.

A polymer solution can be mixed with a component other than the maleimide copolymer. The component other than the maleimide copolymer preferably constitutes less than 20 parts by weight per 100 parts by weight of the maleimide copolymer. More than 20 parts by mass tends to result in a decrease in transparency, film strength, and the uniformity of the film thickness. The component other than the maleimide copolymer can be a silane coupling agent or a phosphate for improving adhesiveness. A phenolic antioxidant may be added to the polymer layer 2 in order to reduce coloring during heat treatment. For the purpose of improving the solvent resistance of the polymer layer, a thermosetting or photocurable resin, such as an epoxy resin, a melamine resin, or an acrylic resin, or a crosslinking agent can be mixed. A small amount of fine inorganic particles of SiO₂, TiO₂, ZrO₂, SiO₂, ZnO, MgO, Al₂O₃, or the like may be mixed to adjust the refractive index or increase the hardness of the film.

The organic solvent is preferably a solvent in which a polymer component is dissolved and the coating liquid A1 is not rapidly thickened. Such a solvent may be a ketone, such as 2-butanone, methyl isobutyl ketone, cyclopentanone, or cyclohexanone; an ester, such as ethyl acetate, n-butyl acetate, ethylene glycol monomethyl ether acetate, propylene glycol monomethyl ether acetate, ethyl lactate, or γ-butyrolactone; an ether, such as tetrahydrofuran, dioxane, diisopropyl ether, dibutyl ether, cyclopentyl methyl ether, or diglyme; an aromatic hydrocarbon, such as toluene, xylene, or ethylbenzene; a chlorinated hydrocarbon, such as chloroform, methylene chloride, or tetrachloroethane; or N-methylpyrrolidone, N,N-dimethylformamide, N,N-dimethylacetamide, dimethyl sulfoxide, or sulfolane. Furthermore, an alcohol, such as 1-butanol, 1-ethoxy-2-propanol, methyl cellosolve, or methoxypropanol, may also be used in combination. These solvents may be used alone or in combination.

Next, the coating liquid A2 when the first layer 21 is an inorganic compound layer is described.

The coating liquid A2 contains an inorganic compound component constituting the first layer 21 and an organic solvent.

The inorganic compound component in the coating liquid A2 is preferably a metal alkoxide. The metal alkoxide may be a zirconium alkoxide, a silicon alkoxide, a titanium alkoxide, a zinc compound, an aluminum compound, or the like.

The zirconium alkoxide is, for example, zirconium tetramethoxide, zirconium tetraethoxide, zirconium tetra-n-propoxide, zirconium tetraisopropoxide, or zirconium tetra-n-butoxide.

The silicon alkoxide is, for example, one with a lower alkyl group.

The zinc compound is, for example, zinc acetate, zinc chloride, zinc nitrate, zinc stearate, zinc oleate, or zinc salicylate, particularly zinc acetate or zinc chloride.

The aluminum compound may be aluminum ethoxide, aluminum isopropoxide, aluminum-n-butoxide, aluminum-sec-butoxide, aluminum-tert-butoxide, aluminum acetylacetonate, an oligomer thereof, aluminum nitrate, aluminum chloride, aluminum acetate, aluminum phosphate, aluminum sulfate, aluminum hydroxide, or the like.

The organic solvent in the coating liquid A2 may be any solvent that does not cause precipitation of an alkoxide of a metal, such as zirconium, silicon, titanium, zinc, or aluminum, and does not cause rapid thickening of the coating liquid A2 during the process.

Specific examples thereof include the following organic solvents. An alcohol, such as methanol, ethanol, 2-propanol, butanol, ethylene glycol, or ethylene glycol mono-n-propyl ether; an aliphatic or alicyclic hydrocarbon, such as n-hexane, n-octane, cyclohexane, cyclopentane, or cyclooctane; an aromatic hydrocarbon, such as toluene, xylene, or ethylbenzene; an ester, such as ethyl formate, ethyl acetate, n-butyl acetate, ethylene glycol monomethyl ether acetate, ethylene glycol monoethyl ether acetate, or ethylene glycol monobutyl ether acetate; a ketone, such as acetone, methyl ethyl ketone, methyl isobutyl ketone, or cyclohexanone; an ether, such as dimethoxyethane, tetrahydrofuran, dioxane, or diisopropyl ether; a chlorinated hydrocarbon, such as chloroform, methylene chloride, carbon tetrachloride, or tetrachloroethane; or an aprotic polar solvent, such as N-methylpyrrolidone, dimethylformamide, dimethylacetamide, or ethylene carbonate. Two or more of these solvents may be used in combination.

When used as a raw material, a metal alkoxide has high reactivity with water and is rapidly hydrolyzed by moisture in the air or by the addition of water. Thus, it is also preferred to add a stabilizer to the coating liquid A2 to suppress rapid hydrolysis. The stabilizer may be a β-diketone compound, such as acetylacetone, dipivaloylmethane, trifluoroacetylacetone, hexafluoroacetylacetone, benzoylacetone, or dibenzoylmethane; a β-keto ester compound, such as methyl acetoacetate, ethyl acetoacetate, allyl acetoacetate, benzyl acetoacetate, iso-propyl acetoacetate, tert-butyl acetoacetate, iso-butyl acetoacetate, 2-methoxyethyl acetoacetate, or 3-keto-n-valeric acid methyl; or an alkanolamine, such as monoethanolamine, diethanolamine, or triethanolamine.

### (Method for Applying Coating Liquid A)

A method for applying the coating liquid A to the substrate 1 may be any method that can be controlled to have a desired film thickness. Specific examples thereof include a spin coating method, a blade coating method, a roll coating method, a slit coating method, a printing method, a gravure coating method, and a dip coating method. To produce an article with a three-dimensionally complicated shape, such as a concave surface, a spin coating method is particularly preferred because a coating film with a uniform thickness is easily formed. The thickness of the first layer 21 can be controlled by adjusting the rotational speed in the spin coating method, adjusting the solid concentration of the coating liquid A, or the like.

### (3) Step of applying second coating liquid to first coating film to form second coating film

The coating liquid B for forming the second layer is described below.

### (Coating Liquid B)

The coating liquid B for forming the second layer 22 contains the particles 221 constituting the second layer 22, a component to be the binder 222, and a solvent. Although an organic solvent or water can be used as the solvent, an organic solvent is particularly preferred when the coating liquid B is applied by a spin coating method.

The material, shape, and size of the particles 221 in the coating liquid B are as described above. The average particle size of the particles 221 in the coating liquid B can be calculated by extracting the particles 221 from the coating liquid B, washing the particles, drying the washed particles, taking a TEM image of the dried particles, measuring the Feret diameters of 50 or more particles, and averaging the Feret diameters.

The binder 222 that binds the particles 221 together is preferably an inorganic material of the same quality as the particles 221. When particles of silicon oxide are used as the particles 221, the component to be the binder 222 is preferably a silicon oxide compound. When all the solid components (solutes) in the coating liquid B are inorganic components, a porous layer with high mechanical strength and a low refractive index of 1.23 or less can be formed. A preferred example of the silicon oxide compound is a silicon oxide oligomer produced by hydrolysis and condensation of a silicate.

Although the particles of silicon oxide originally have silanol (Si-OH) groups on the surface, the number of silanol groups on the surface can be increased by mixing with a silicon oxide oligomer in the coating liquid B. This makes it more easier for the surfaces of the particles 221 to bond to each other. When the coating liquid B is applied and then cured, the plurality of particles 221 can be bound together by a cured product of the silicon oxide oligomer (the binder 222) and form a film with high mechanical strength.

The amount of the component to be the binder 222 is preferably 0.2 parts by mass or more and 20 parts by mass or less, more preferably 1 part by mass or more and 15 parts by mass or less, still more preferably 3.0 parts by mass or more and 15 parts by mass or less, per 100 parts by mass of the solid component contained in the coating liquid B. When the amount of the component to be the binder is 0.2 parts by mass or more and 20 parts by mass or less, it is possible to suppress a decrease in mechanical strength due to a decrease in binding between particles and suppress an increase in refractive index due to an increase in the amount of the component to be the binder. This can also suppress the component to be the binder disrupting particle arrangement, which would otherwise worsen the scattering of visible light in the resulting film.

The solvent used for the coating liquid B may be any solvent as long as the particles 221 do not aggregate during the process and the coating liquid B does not rapidly thicken. When the state in which the particles 221 in the coating liquid B are uniformly dispersed can be maintained, a coating film in which the particles 221 are uniformly distributed on the substrate 1 can be formed. In contrast, when the particles 221 in the coating liquid B are present in an aggregated state, the aggregated particles 221 are applied to the substrate 1, and the desired refractive index tends to not be achieved due to disturbance in the arrangement, or light scattering tends to increase.

Specific examples of the organic solvent include the following: a monohydric alcohol, such as methanol, ethanol, 1-propanol, 2-propanol, 1-butanol, 2-butanol, 2-methylpropanol, 1-pentanol, 2-pentanol, cyclopentanol, 2-methylbutanol, 3-methylbutanol, 1-hexanol, 2-hexanol, 3-hexanol, 4-methyl-2-pentanol, 2-methyl-1-pentanol, 2-ethylbutanol, 2,4-dimethyl-3-pentanol, 3-ethylbutanol, 1-heptanol, 2-heptanol, 1-octanol, or 2-octanol; a dihydric or polyhydric alcohol, such as ethylene glycol or triethylene glycol; an ether alcohol, such as methoxyethanol, ethoxyethanol, propoxyethanol, isopropoxyethanol, butoxyethanol, 1-methoxy-2-propanol, 1-ethoxy-2-propanol, 1-propoxy-2-propanol, or 3-methoxy-1-butanol; an ether, such as dimethoxyethane, diglyme (diethylene glycol dimethyl ether), tetrahydrofuran, dioxane, diisopropyl ether, dibutyl ether, or cyclopentyl methyl ether; an ester, such as ethyl formate, ethyl acetate, n-butyl acetate, methyl lactate, ethyl lactate, ethylene glycol monomethyl ether acetate, ethylene glycol monoethyl ether acetate, ethylene glycol monobutyl ether acetate, or propylene glycol monomethyl ether acetate; an aliphatic or an alicyclic hydrocarbon, such as n-hexane, n-octane, cyclohexane, cyclopentane, or cyclooctane; an aromatic hydrocarbon, such as toluene, xylene, or ethylbenzene; a ketone, such as acetone, methyl ethyl ketone, methyl isobutyl ketone, cyclopentanone, or cyclohexanone; a chlorinated hydrocarbon, such as chloroform, methylene chloride, carbon tetrachloride, or tetrachloroethane; or an aprotic polar solvent, such as N-methylpyrrolidone, N,N-dimethylformamide, N,N-dimethylacetamide, or ethylene carbonate; or the like. Two or more of these solvents may be used in combination.

From the perspective of dispersibility and coatability of the particles 221, 30% or more of the organic solvent in the coating liquid B is preferably a water-soluble solvent having a hydroxy group with 4 or more and 6 or less carbon atoms. In particular, a solvent containing one or more selected from the group consisting of ethoxyethanol, propoxyethanol, isopropoxyethanol, butoxyethanol, 1-methoxy-2-propanol, 1-ethoxy-2-propanol, 1-propoxy-2-propanol, 3-methoxy-1-butanol, and ethyl lactate is particularly preferred.

The coating liquid B can be applied in the same manner as the coating liquid A. As described above, the solid components of the coating liquid B for forming the second layer 22 are all inorganic compounds and have a low affinity for the solid components of the coating liquid A1 when the first layer 21 is an organic layer.

Thus, when the first layer 21 is an organic layer, after the coating liquid A1 is applied to form a first coating film, the coating liquid B can be continuously applied to the first coating film without curing the first coating film. The term "curing", as used herein, means that the change in refractive index after 24 hours from evaporation of the organic solvent contained in the coating liquid is 0.01 or less.

When the coating liquid B is applied without curing the first coating film, the particles 221 in the coating liquid B slightly enter from the surface of the first coating film. In this state, when the step (4) of curing the coating film of the coating liquid B is performed, the coating films of the coating liquids A1 and B are cured together.

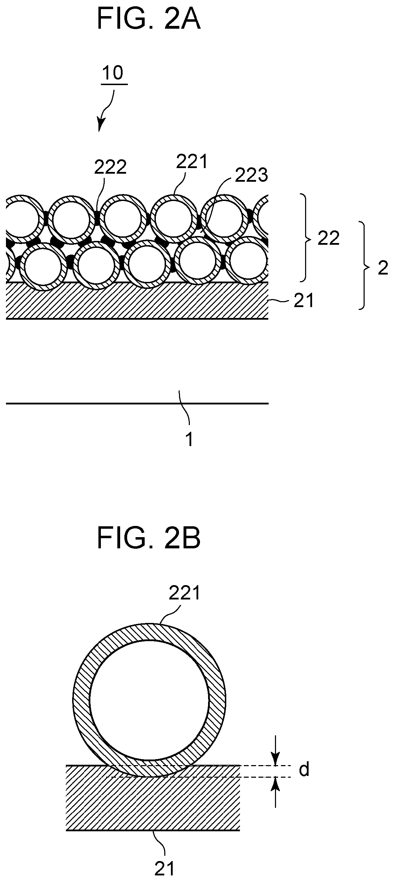

Fig. 2A is a schematic view of a cross-sectional structure of a member produced in this manner, and Fig. 2B is a partially enlarged view of the interface between the first layer 21 and the second layer 22. At the interface between the first layer 21 and the second layer 22 of the optical interference layer, as illustrated in Fig. 2B, particles 221 in the second layer 22 enter the second layer 22 and form minute irregularities at the interface.

The depth d to which the particles 221 enter the second layer 22 is 2 nm or more and 15 nm or less, which does not affect the optical coherence but increases the contact area between the particles 221 and the first layer 21 and has the effect of increasing the adhesion between the first layer 21 and the second layer 22. Furthermore, the irregularities can form a pseudo-gradient of the refractive index and also produce an effect of suppressing reflection of obliquely incident light. To further enhance the adhesion between the first layer 21 and the second layer 22, the depth d is preferably 5 nm or more and 15 nm or less. The entry depth d can be reduced by performing a drying step of removing part of the organic solvent contained in the first coating film before the step of applying the coating liquid B. When the particles 221 are not intended to enter the second layer 22, the coating liquid B may be applied after the first coating film is cured.

When the first layer 21 is an inorganic compound layer, both the solid components in the coating liquid A2 and the solid components in the coating liquid B are inorganic compounds and have a high affinity. Thus, when the coating liquid B is continuously applied to the coating film of the coating liquid A2 without curing the coating film of the coating liquid A2, the solid components are mixed with each other, making it difficult to form individual layers.

When the first layer 21 is an inorganic compound layer, the second coating film may be formed by applying the coating liquid B after the step of curing the first coating film. In this case, although the particles 221 in the second layer 22 do not enter the second layer 22 as illustrated in Figs. 2A and 2B, the inorganic compound layers stacked result in a high affinity and high adhesion.

### (4) Step of curing second coating film

As described above, when the coating liquid B is applied without curing the first coating film, the first coating film and the second coating film are cured together in this step. When the second coating film is formed by applying the coating liquid B after the step of curing the first coating film, only the second coating film is cured.

In this step, curing is preferably performed at 20°C or more and 200°C or less, depending on the heat resistance temperature of the substrate 1. The curing time may be any time during which the organic solvent in the coating film can be removed without affecting the substrate 1. A method of curing the coating film may be heating with an oven or a hot plate or may be curing over time without active heating.

### <Optical Element>

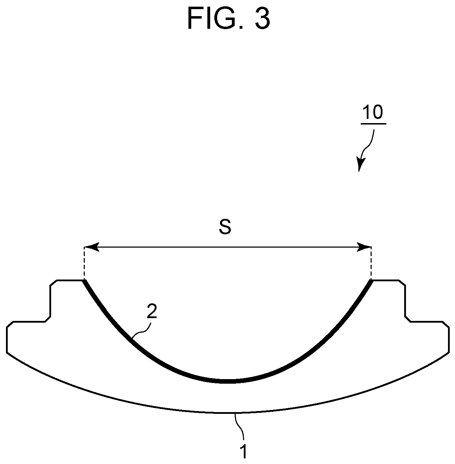

Fig. 3 is a schematic view of an example of the member 10 in which the substrate has a curved surface, more specifically, an embodiment of a lens with a concave main surface (light incident surface). The optical interference layer 2 is provided in the optical effective region S of the main surface. The optical interference layer 2 may be formed in part of the optically effective region.

Since the first layer 21 and the second layer 22 constituting the optical interference layer 2 are formed by a coating method, the thicknesses of the layers increase from the central portion to the outer periphery of the curved surface.

When the first layer 21 and the second layer 22 are formed by applying a coating liquid by a spin coating method, the ratio of the thickness at the outer periphery to the thickness in the central portion (half-opening angle: 0 degrees) of the optical element is 1.0 or more and 1.2 or less. The term "outer periphery" refers to a region with a width of 2 mm along the outer edge of the effective diameter of the main surface. Since the optical design on the light incident surface of the lens is designed so as to be optimal at the central portion of the light incident surface, when the thickness ratio is 1.0 or more and 1.2 or less, it is possible to suppress significant deterioration in appearance due to a decrease in the antireflection effect of the periphery. Furthermore, due to a small in-plane thickness ratio, it is also possible to suppress the occurrence of a crack in the film.

When the optical interference layer 2 is provided on the curved surface as illustrated in Fig. 3, the first layer 21 and the second layer 22 satisfying the relationship of 1.0 ≤ the thickness of the second layer 22/the thickness of the first layer 21 ≤ 1.5 result in a high antireflection effect.

The second layer 22 has a smaller increase in thickness from the central portion to the outer periphery than that of the first layer 21. This is probably because, when a coating liquid is applied to a curved surface, a spin coating method is typically used, and a coating liquid containing inorganic compound particles for forming the second layer 22 has high coatability to the curved surface particularly by the spin coating method.

Although Fig. 3 illustrates an example of the optical interference layer 2 provided on the concave surface, even when the optical interference layer 2 is provided on a convex surface or another curved surface, a sufficient antireflection effect can be produced in the same manner also in a portion other than the central portion. In particular, a sufficient antireflection effect can be produced even at the outer periphery of a surface with a large curvature (a small radius of curvature), where it has been difficult to suppress reflection at the outer periphery with a known antireflection film.

When the first layer 21 is an organic layer and when the coating liquid for forming the second layer 22 is applied without curing the coating liquid for forming the first layer 21, minute irregularities formed at the interface between the first layer 21 and the second layer 22 can further improve the oblique-incidence characteristics in a wide-angle portion.

### <Optical Apparatus>

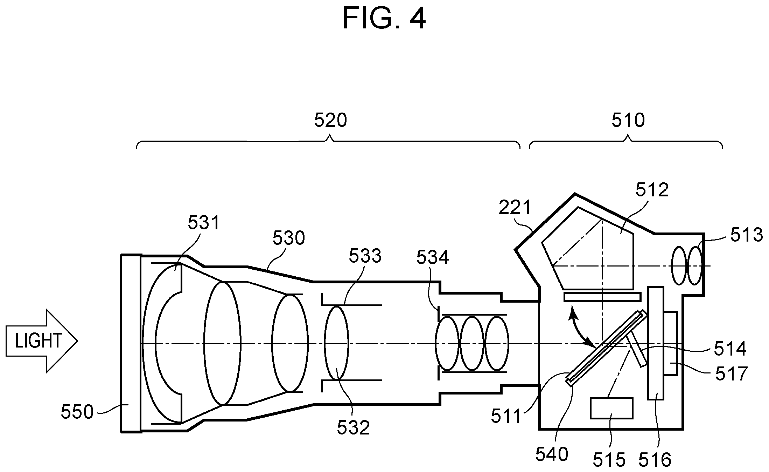

Fig. 4 illustrates a configuration example of an imaging apparatus including a lens barrel (interchangeable lens) as an optical apparatus including an article according to the present invention. Fig. 4 illustrates a digital single-lens reflex camera to which a lens barrel (interchangeable lens) is attached.

The term "optical apparatus", as used herein, refers to an apparatus with an optical system, such as binoculars, a microscope, a semiconductor exposure apparatus, or an interchangeable lens.

The term "imaging apparatus", as used herein, refers to electronic equipment including an imaging element for receiving light passing through an optical element, for example, imaging equipment, such as a digital still camera or a digital camcorder, an imaging system, such as a robot or a drone, on which the imaging equipment is mounted, or a mobile phone. The imaging apparatus may also be a modular form mounted on electronic equipment, for example, a camera module.

In Fig. 4, although a camera body 510 is coupled to a lens barrel 520, which is an optical apparatus, the lens barrel 520 is a so-called interchangeable lens detachably mounted on the camera body 520.

Light from a photographic subject passes through an optical system including a plurality of lenses 531 and 532 arranged on the optical axis of an imaging optical system in a housing 530 of the lens barrel 520 and is received by an imaging element. An article according to the present invention can be used as the lenses 531 and 532 constituting the optical system.

The lens 532 is supported by an inner tube 533 and is movably supported relative to an outer tube of the lens barrel 520 for focusing and zooming.

In the observation period before photographing, light from a photographic subject is reflected by a main mirror 511 in the housing of the camera body 510, passes through a prism 512, and then provides the photographer with an image to be photographed through a viewing lens 513. The main mirror 511 is, for example, a half mirror, light transmitted through the main mirror is reflected by a sub-mirror 514 in the direction of an autofocusing (AF) unit 515, and the reflected light is used, for example, for focusing. The main mirror 511 is attached to and supported by a main mirror holder 540 by adhesion or the like. For photographing, the main mirror 511 and the sub-mirror 514 are moved out of the optical path by a driving mechanism (not shown), a shutter 516 is opened, and an optical image to be photographed incident from the lens barrel 520 is focused on an imaging element 517. Furthermore, a diaphragm 534 is configured to change the aperture area and thereby change the brightness and the depth of focus while photographing.

A lens filter 550 is mounted on the outermost side of the optical system, that is, at a position of the lens barrel 520 farthest from the camera body 510.

The member 10 with the configuration illustrated in Figs. 1A and 1B may be used for the lens filter 550.

### (First Exemplary Embodiment)

Exemplary Embodiments 1 to 3 of the present invention and Comparative Examples 1 to 3 are described below. A component including a multilayer film formed on a substrate was produced by the method described below. The present invention can be appropriately modified without departing from the gist thereof and is not limited to the exemplary embodiments described below.

### <Production of Member>

A substrate with the following specification was prepared. As optical lenses a and b and flat glasses, a plurality of types of glass with different refractive indices were prepared in the exemplary embodiments and the comparative examples.
Optical lens a: A lens with an outer diameter φ of 45 mm and a half-opening angle of 80 degrees having a polished concave surface
Optical lens b: A lens with an outer diameter φ of 75 mm and a half-opening angle of 80 degrees having a polished concave surface
Flat glass: A single-side polished article with a φ of 30 mm and a thickness of 1 mm
Flat synthetic silica glass a: A single-side polished article with a φ of 30 mm and a thickness of 1 mm
Flat synthetic silica glass b: A double-side polished article with a φ of 30 mm and a thickness of 1 mm
Silicon wafer: A single-side polished article with a φ of 30 mm

The optical interference layer 2 according to each of the exemplary embodiments and comparative examples was formed on the polished surface in the single-side polished article or on one polished surface in the double-side polished article. The types of glass used in the exemplary embodiments and comparative examples are summarized in Table 1.

### <Evaluation>

Members produced in the exemplary embodiments and comparative examples were subjected to the following evaluation.

### [Optical Characteristics]

### (Antireflection Performance)

The average reflectance of normal incident light was measured at positions where the optical lenses a and b provided with the optical interference layer 2 had half-opening angles of 0 degrees and 45 degrees. The reflectance was measured in an incident light wavelength range of 400 nm to 700 nm. The reflectance was measured with a reflectance measuring apparatus USPM-RU3 manufactured by Olympus Corporation.

The average reflectance thus measured was evaluated according to the following criteria. The antireflection effect required for the optical lenses is different between the position with a half-opening angle of 0 degrees and the position with a half-opening angle of 45 degrees and is therefore evaluated according to different criteria.

Evaluation criteria at a half-opening angle of 0 degrees
A: The average reflectance is 0% or more and 0.2% or less
B: The average reflectance is more than 0.2% and 0.4% or less
C: The average reflectance is more than 0.4% and 0.6% or less
D: The average reflectance is more than 0.6%

Evaluation criteria at a half-opening angle of 45 degrees
A: The average reflectance is 0% or more and 0.4% or less
B: The average reflectance is more than 0.4% and 0.6% or less
C: The average reflectance is more than 0.6 and 0.8% or less
D: The average reflectance is more than 0.8%

"A" was judged to have very high antireflection performance, and "D" was judged to have insufficient antireflection performance.

### (Scattering)

A substrate holder for holding the flat synthetic silica glass b at a predetermined position was prepared.

An illuminometer (T-10M manufactured by Konica Minolta Sensing) was installed in the substrate holder, and the illumination intensity of white light was adjusted while measuring the illuminance so that the illuminance of light emitted in the direction perpendicular to the main surface of the substrate held by the substrate holder was 4000 lux. The flat synthetic silica glass sheet b on which the optical interference layer 2 was formed was then placed on the substrate holder so that white light was incident on the surface on which the optical interference layer was provided.

The surface of the flat synthetic silica glass sheet b on which the optical interference layer 2 was provided was inclined by 45 degrees from the state at the time of installation. The surface of the flat synthetic silica glass sheet b on which the optical interference layer was not provided was photographed in the normal direction using a camera (lens: EF50 mm F2.5 Compact Macro manufactured by CANON KABUSHIKI KAISHA, camera: EOS-70D manufactured by CANON KABUSHIKI KAISHA). The imaging conditions of the camera were ISO 400, white balance: fair weather, diaphragm: 10, and a shutter speed: 10 seconds.

The average brightness value was calculated as a scattering value at any four locations of 700 pix x 700 pix on the glass substrate surface in a photographed image to evaluate scattering.

In the present invention, a scattering value of 25 or less as calculated by the above method was judged to be low scattering.

### (Antireflection Performance at Outer Periphery of Curved Surface)

An optical interference layer was formed on the optical lenses a and b to visually evaluate the appearance as a wide-angle lens. The appearance was evaluated according to the following criteria.
A: Reflection at the outer periphery is hardly noticeable
B: Reflection at the outer periphery is noticeable
C: Reflection at the outer periphery is highly noticeable

Those rated A have almost no change in appearance from the central portion to the outer periphery of the lenses and are considered to have a high antireflection effect. Those rated B are inferior to those rated A but are considered to have a sufficient antireflection effect. Those rated C are considered to have an insufficient antireflection effect.

### [Mechanical Characteristics]

A polyester wiper (Alpha Wiper TX1009 manufactured by Texwipe) impregnated with ethanol was pressed against the surface of the optical interference layer provided on the flat synthetic silica glass a and was reciprocated 50 times while applying a load of 300 g/cm2. This was followed by optical microscope observation to evaluate the film strength. The evaluation criteria were as follows:
A: Almost no change in appearance is observed.
B: A slight change in appearance is observed.
C: A minute linear scratch or the like is observed.
D: A significant change in appearance is observed, and a linear scratch or peeling is observed.

Those rated A were judged to have very high strength, those rated B were judged to have high strength, those rated C were judged to have acceptable strength, and they were determined to have no problem in use as the optical interference layer.

### [Evaluation of Refractive Index and Thickness of Each Layer]

The refractive index of each of the first layer 21 and the second layer 22 and the depth to which the particles in the second layer 22 entered the first layer 21 were evaluated by the following procedure.

For the silicon wafers on which the optical interference layer 2 was formed and for a plurality of types of flat glass with different refractive indices, the reflection characteristics were measured with a spectroscopic ellipsometer (VASE, manufactured by J. A. Woollam Japan Co., Inc.) at a wavelength of 380 nm to 800 nm. A region where particles entered the adjacent organic layer was defined as a mixture layer, and fitting analysis was performed for a layered configuration of the substrate, the optical interference layer, and the mixture layer to determine the refractive index of each layer and the thickness of the mixture layer. The thickness of the mixture layer corresponds to the depth to which the particles enter the adjacent organic layer.

The depth to which the particles enter the adjacent organic layer was also determined from a cross-sectional STEM image. First, as a treatment before observation, a flat glass specimen on which the optical interference layer 2 was formed was fixed to a sample stage with a C paste, and Pt-Pd was sputtered once for 60 seconds to impart electrical conductivity. Next, a Pt protective film was deposited using an E-beam and a Ga ion beam, and µ-sampling and thinning processing (accelerating voltage: 30 kV) were performed to prepare a specimen for cross-sectional STEM observation. The processed specimen was subjected to cross-sectional ADF (annular dark field)-STEM observation (apparatus used: TecnaiF20 manufactured by FEI), and the depth to which particles entered the first layer 21 was measured.

### [Exemplary Embodiment 1]

An optical interference layer was formed on each of optical lenses a and b and a flat glass sheet each made of a glass type S-LAH98 (refractive index: nd = 1.954, manufactured by Ohara Inc.), flat synthetic silica glass sheets a and b, and a silicon wafer by the following procedure.

Hexane was gradually added under reflux to 200 g of 4,4'-methylenebis(aminocyclohexane) (hereinafter referred to as DADCM, manufactured by Tokyo Chemical Industry Co., Ltd.) to completely dissolve the DADCM. After stopping heating and standing at room temperature for several days, a precipitate was filtered off and dried under reduced pressure. 58 g of an alicyclic diamine DADCM was produced as a white solid.

12 mmol in total of three types of diamines, that is, an alicyclic diamine DADCM, an aromatic diamine 4,4'-bis(4-aminophenoxy)biphenyl (product name BODA: manufactured by Wakayama Seika Kogyo Co., Ltd.), and a siloxane-containing diamine 1,3-bis(3-aminopropyl)tetramethyldisiloxane (product name PAM-E: manufactured by Shin-Etsu Chemical Co., Ltd.) were dissolved in N,N-dimethylacetamide (hereinafter referred to as DMAc).

Approximately 12 mmol of an acid dianhydride was added to the diamine solution during water cooling. The acid dianhydride was 4-(2,5-dioxotetrahydrofuran-3-yl)-1,2,3,4-tetrahydronaphthalene-1,2-dicarboxylic anhydride (product name TDA-100: manufactured by New Japan Chemical Co., Ltd.). The amount of DMAc was adjusted so that the total mass of the diamines and the acid dianhydride was 20% by weight.

This solution was stirred at room temperature for 15 hours to cause a polymerization reaction. After the solution was diluted with DMAc to 8% by weight, 7.4 ml of pyridine and 3.8 ml of acetic anhydride were added thereto, and the solution was stirred at room temperature for 1 hour. The solution was stirred in an oil bath in the temperature range of 60°C to 70°C for 4 hours. A polymer was collected from the polymerization solution by reprecipitation in methanol and was washed with methanol several times. After drying at 60°C for 24 hours, a white to light yellow polyimide powder was produced.

The polyimide was dissolved in cyclohexanone at a solid concentration of 3.0% by mass to produce a coating liquid A1-1 for forming a first layer.

While 1-ethoxy-2-propanol (hereinafter referred to as 1E2P) was added to 580 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass), isopropyl alcohol was evaporated by heating. Isopropyl alcohol was evaporated to a solid concentration of 19.5% by mass to prepare 610 g of a 1E2P solvent-replaced liquid of hollow silica particles (hereinafter referred to as a solvent-replaced liquid 1). Dodecafluorosuberic acid (manufactured by Tokyo Chemical Industry Co., Ltd.) was added to the solvent-replaced liquid 1 at a mass ratio of hollow silica particles to dodecafluorosuberic acid of 100:1, thereby producing a dispersion liquid 1.

3.6 g of phosphinic acid diluted with pure water to a concentration of 0.1%, 11.4 g of 1-propoxy-2-propanol, and 4.5 g of methyl polysilicate (methyl silicate 53A manufactured by Colcoat Co., Ltd.) were slowly added to another vessel and were stirred at room temperature for 120 minutes to prepare a silica sol 1 with a solid concentration of 12% by mass.

The dispersion liquid 1 was diluted with ethyl lactate to a solid concentration of 4.5% by mass, and the silica sol 1 was then added thereto at a ratio of the hollow silicon oxide particles to the silica sol component of 100:12. They were then mixed by stirring at room temperature for 2 hours to prepare a coating liquid B-1 for forming the second layer 22 containing hollow silica particles.

The coating liquid A1-1 was dropped on each substrate to form a film using a spin coater, and the coating liquid B-1 was then dropped to form a film using the spin coater. Curing was performed at room temperature for 24 hours or more to produce a member having an optical interference layer. The thickness of each layer constituting the optical interference layer was 79.5 nm and 96 nm in this order from the substrate side. The mixture layer had a thickness of 14 nm, which was almost the same as the depth to which the particles in the second layer 22 entered the first layer 21 as measured from the cross-sectional STEM image.

### [Exemplary Embodiment 2]

An optical interference layer was formed on each of optical lenses a and b and a flat glass sheet each made of a glass type S-LAH53 (refractive index: nd = 1.806, manufactured by Ohara Inc.), flat synthetic silica glass sheets a and b, and a silicon wafer by the following procedure.

1.6 g of Rikacid HH (manufactured by New Japan Chemical Co., Ltd.) and 96.4 g of 1-methoxy-2-propanol were added to 2 g of an epoxy resin jER828 (manufactured by Mitsubishi Chemical Corporation) to prepare a coating liquid A1-2 for forming a first layer.

The coating liquid A1-2 was dropped on each substrate to form a film using a spin coater and was then prebaked at 40°C for 30 minutes. The coating liquid B-1 was then dropped to form a film using the spin coater and was cured at 80°C for 2 hours or more to produce a member having an optical interference layer composed of two layers. The thickness of each layer constituting the optical interference layer was 82.1 nm and 102 nm in this order from the substrate side. The mixture layer had a thickness of 6 nm, which was almost the same as the depth to which the particles in the second layer 22 entered the first layer 21 as measured from the cross-sectional STEM image.

### [Exemplary Embodiment 3]

An optical interference layer was formed on each of optical lenses a and b and a flat glass sheet each made of a glass type S-TIM28 (refractive index: nd = 1.689, manufactured by Ohara Inc.), flat synthetic silica glass sheets a and b, and a silicon wafer by the following procedure.

10.2 g of N-cyclohexylmaleimide (hereinafter referred to as CHMI), 0.2 g of 2,2,2-trifluoroethyl methacrylate (product name M-3F: manufactured by Kyoeisha Chemical Co., Ltd.), 0.45 g of 3-(methacryloyloxy)propyltrimethoxysilane (product name LS-3380: manufactured by Shin-Etsu Chemical Co., Ltd.), and 0.08 g of 2,2'-azobis(isobutyronitrile) (hereinafter referred to as AIBN) were dissolved by stirring in 24.8 g of toluene.

This solution was repeatedly degassed and purged with nitrogen while being cooled with ice water and was then stirred at 60°C to 70°C for 7 hours under a nitrogen flow. The polymerization solution was slowly poured into vigorously stirred methanol, and precipitated polymer was filtered off and was then washed several times by stirring in methanol. The polymer recovered by filtration was dried under vacuum in the range of 80°C to 90°C. 8.3 g of maleimide copolymer 1 with a maleimide copolymerization ratio of 0.95 was prepared as a white powder (yield: 81%). 2.2 g of the maleimide copolymer 1 powder was dissolved in 97.8 g of a mixed solvent of cyclopentanone and cyclohexanone to prepare a solution of the maleimide copolymer 1 and thereby prepare a coating liquid A1-3 for forming a first layer.

The coating liquid A1-3 was dropped on each substrate to form a film with a thickness of approximately 80 nm using a spin coater, and the coating liquid B-1 was then dropped to form a film with a thickness of approximately 105 nm. Drying was performed at room temperature for 24 hours or more to produce a member having an optical interference layer composed of two layers. The thickness of each layer constituting the optical interference layer was 81.7 nm and 105 nm in this order from the substrate side. The mixture layer had a thickness of 13 nm, which was almost the same as the depth to which the particles in the second layer 22 entered the first layer 21 as measured from the cross-sectional STEM image.

### [Exemplary Embodiment 4]

An optical interference layer was formed on each of optical lenses a and b and a flat glass sheet each made of a glass type S-NSL5 (refractive index: nd = 1.522, manufactured by Ohara Inc.), flat synthetic silica glass sheets a and b, and a silicon wafer by the following procedure.

300 g of 1-methoxy-2-propanol and 5 g of the silica sol 1 were added to 25 g of chain silica particle dispersion PL-1 (manufactured by Fuso Chemical Co., Ltd.) to prepare coating liquid A2-1 for forming a first layer.

The coating liquid A2-1 was dropped on each substrate to form a film with a thickness of approximately 80 nm using a spin coater and was cured by baking at 40°C for 30 minutes. The coating liquid B-1 was then dropped to form a film with a thickness of approximately 110 nm. The coating film of the coating liquid B-1 was cured at room temperature for 24 hours or more to produce a member having an optical interference layer composed of two layers. The thickness of each layer constituting the optical interference layer was 79.2 nm and 108 nm in this order from the substrate side. The mixture layer had a thickness of 10 nm, which was almost the same as the depth to which the particles in the second layer 22 entered the first layer 21 as measured from the cross-sectional STEM image.

### [Exemplary Embodiment 5]

An optical interference layer was formed on each of optical lenses a and b and a flat glass sheet each made of a glass type L-BAL42 (refractive index: nd = 1.583, manufactured by Ohara Inc.), flat synthetic silica glass sheets a and b, and a silicon wafer by the following procedure.

6.1 g of CHMI, 4.0 g of 2,2,2-trifluoroethyl methacrylate (product name M-3F: manufactured by Kyoeisha Chemical Co., Ltd.), 0.45 g of 3-(methacryloyloxy)propyltrimethoxysilane (product name LS-3380: manufactured by Shin-Etsu Chemical Co., Ltd.), and 0.08 g of AIBN were dissolved by stirring in 24.8 g of toluene.

This solution was repeatedly degassed and purged with nitrogen while being cooled with ice water and was then stirred at 60°C to 70°C for 7 hours under a nitrogen flow. The polymerization solution was slowly poured into vigorously stirred methanol, and precipitated polymer was filtered off and was then washed several times by stirring in methanol. The polymer recovered by filtration was dried under vacuum in the range of 80°C to 90°C. 8.3 g of maleimide copolymer 2 with a maleimide copolymerization ratio of 0.57 was prepared as a white powder (yield: 81%). 2.2 g of the maleimide copolymer 2 powder was dissolved in 97.8 g of a mixed solvent of cyclopentanone and cyclohexanone to prepare a solution of the maleimide copolymer 2 and thereby prepare a coating liquid A1-4 for forming a first layer.

The coating liquid A1-4 was dropped on each substrate to form a film with a thickness of approximately 90 nm using a spin coater. The coating liquid B-1 was then dropped to form a film with a thickness of approximately 110 nm. Curing was performed at room temperature for 24 hours or more to produce a member having an optical interference layer composed of two layers. The thickness of each layer constituting the optical interference layer was 90.2 nm and 109 nm in this order from the substrate side. The mixture layer had a thickness of 11 nm, which was almost the same as the depth to which the particles in the second layer 22 entered the first layer 21 as measured from the cross-sectional STEM image.

### [Exemplary Embodiment 6]

An optical interference layer was formed on each of optical lenses a and b and a flat glass sheet each made of a glass type S-TIM27 (refractive index: nd = 1.640, manufactured by Ohara Inc.), flat synthetic silica glass sheets a and b, and a silicon wafer by the following procedure.

1.1 g of the maleimide copolymer 1 powder and 1.1 g of the maleimide copolymer 2 powder were dissolved in 97.8 g of a mixed solvent of cyclopentanone and cyclohexanone to prepare a solution of the maleimide copolymers and thereby prepare a coating liquid A1-5 for forming a first layer.

The coating liquid A1-5 was dropped on each substrate to form a film with a thickness of approximately 80 nm using a spin coater, and the coating liquid B-1 was then dropped to form a film with a thickness of approximately 105 nm. Curing was performed at room temperature for 24 hours or more to produce a member having an optical interference layer composed of two layers. The thickness of each layer constituting the optical interference layer was 80.5 nm and 105 nm in this order from the substrate side. The mixture layer had a thickness of 14 nm, which was almost the same as the depth to which the particles in the second layer 22 entered the first layer 21 as measured from the cross-sectional STEM image.

### [Exemplary Embodiment 7]

An optical interference layer was formed on each of optical lenses a and b and a flat glass sheet each made of a glass type S-TIH53 (refractive index: nd = 1.847, manufactured by Ohara Inc.), flat synthetic silica glass sheets a and b, and a silicon wafer by the following procedure.

While 1E2P was added to 580 g of an isopropyl alcohol dispersion liquid of hollow silica particles (Thrulya 1110 manufactured by JGC Catalysts and Chemicals Ltd., average particle size: approximately 50 nm, shell thickness: approximately 10 nm, solid content: 20.5% by mass), isopropyl alcohol was evaporated by heating. Isopropyl alcohol was evaporated to a solid concentration of 19.5% by mass to prepare 610 g of a 1E2P solvent-replaced liquid of hollow silica particles (hereinafter referred to as a solvent-replaced liquid 2). Pentafluoropropionic acid (manufactured by Tokyo Chemical Industry Co., Ltd.) was added to the solvent-replaced liquid 2 at a mass ratio of hollow silica particles to pentafluoropropionic acid of 100:0.9, thereby producing a dispersion liquid 2.

The dispersion liquid 2 was diluted with ethyl lactate to a solid concentration of 4.5% by mass, and the silica sol 1 was then added thereto at a mass ratio of the hollow silica particles to the silica sol component of 100:12. The mixture was further mixed by stirring at room temperature for 2 hours to prepare a coating liquid B-2.

The coating liquid A1-1 was dropped on each substrate to form a film with a thickness of approximately 80 nm using a spin coater, and the coating liquid B-2 was then dropped to form a film with a thickness of approximately 105 nm. Curing was performed at room temperature for 24 hours or more to produce a member having an optical interference layer. The thickness of each layer constituting the optical interference layer was 80.2 nm and 104 nm in this order from the substrate side. The mixture layer had a thickness of 12 nm, which was almost the same as the depth to which the particles in the second layer 22 entered the first layer 21 as measured from the cross-sectional STEM image.

### [Comparative Example 1]

Trifluoroacetic acid (manufactured by Tokyo Chemical Industry Co., Ltd.) was added to the solvent-replaced liquid 2 at a mass ratio of hollow silica particles to trifluoroacetic acid of 100:1, thereby producing a dispersion liquid 3.

The dispersion liquid 2 was diluted with ethyl lactate to a solid concentration of 4.5% by mass, and the silica sol 1 was then added thereto at a mass ratio of the hollow silica particles to the silica sol component of 100:14. The mixture was further mixed by stirring at room temperature for 2 hours to prepare a coating liquid B-2.

Six layers shown in Table 1 with a total thickness of 400 nm were formed by a vacuum film formation method on each of optical lenses a and b and a flat glass sheet each made of a glass type S-LAH98 (refractive index: nd = 1.954, manufactured by Ohara Inc.), flat synthetic silica glass sheets a and b, and a silicon wafer. Table 1 follows the stacking sequence.

**[Table 1]**

| Composition | Refractive index nd | Film thickness [nm] |
|---|---|---|
| S-LAH98 (substrate) | 1.954 | |
| Al₂O₃ | 1.63 | 106 |
| ZrO₂ + TiO₂ | 2.1 | 16 |
| Al₂O₃ | 1.63 | 57 |
| ZrO₂ + TiO₂ | 2.1 | 16 |
| Al₂O₃ | 1.63 | 135 |
| SiO₂ | 1.48 | 76 |

The coating liquid B-3 was dropped on the six layers shown in Table 1 to form a film using a spin coater. Curing was performed at room temperature for 24 hours or more to produce a porous layer with a thickness of 123 nm. A member having an optical interference layer formed of seven layers including six layers shown in Table 1 and a porous layer was produced.

### [Comparative Example 2]

An optical interference layer was formed on each substrate of optical lenses a and b and a flat glass sheet each made of a glass type S-LAH55 (refractive index: nd = 1.834, manufactured by Ohara Inc.), flat synthetic silica glass sheets a and b, and a silicon wafer by the following procedure.

The coating liquid A1-3 was dropped on a substrate to form a film with a thickness of approximately 50 nm using a spin coater and was prebaked at 40°C for 30 minutes. The coating liquid A1-4 was then dropped to form a film with a thickness of approximately 40 nm using a spin coater, and the coating liquid B-1 was then continuously dropped to form a film with a thickness of approximately 105 nm. Curing was performed at room temperature for 24 hours or more to produce a member having an optical interference layer composed of three layers. The thickness of each layer constituting the optical interference layer was 50.4 nm, 40.2 nm, and 103 nm in this order from the substrate side. The mixture layer had a thickness of 11 nm, which was almost the same as the depth to which particles in the porous layer entered an organic layer in contact with the porous layer as measured from the cross-sectional STEM image.

### [Comparative Example 3]

Pentafluorobutyric acid (manufactured by Tokyo Chemical Industry Co., Ltd.) was added to the solvent-replaced liquid 2 at a ratio of hollow silica particles to pentafluorobutyric acid of 100:1.2, thereby producing a dispersion liquid 4.

In another vessel, 1.0 g of the maleimide copolymer 1 powder was dissolved in 9.0 g of propylene glycol monomethyl ether acetate (PGMEA) to prepare a solution of maleimide copolymer 3 and thereby prepare an acrylic binder solution.

The dispersion liquid 4 was diluted with ethyl lactate to a solid concentration of 4.5% by mass and was then mixed at a mass ratio of the hollow silica particles to the acrylic binder solution of 100:12. The mixture was then mixed by stirring at room temperature for 2 hours to prepare a coating liquid C containing hollow silica particles.

A SiO₂ layer (refractive index: 1.48) with a thickness of 21.2 nm was formed by a vacuum film formation method on each of optical lenses a and b and a flat glass sheet each made of a glass type S-LAH53 (refractive index: nd = 1.806, manufactured by Ohara Inc.), flat synthetic silica glass sheets a and b, and a silicon wafer. The coating liquid A1-2 was dropped thereon to form a film with a thickness of approximately 50 nm using a spin coater. After prebaking at 40°C for 30 minutes, the coating liquid C was dropped to form a film with a thickness of approximately 110 nm. Curing was performed at 80°C for 2 hours or more to produce a member having an optical interference layer composed of three layers. The thickness of each layer constituting the optical interference layer was 21.2 nm, 49.8 nm, and 111 nm in this order from the substrate side. The mixture layer had a thickness of 5 nm, which was almost the same as the depth to which particles in the porous layer entered an organic layer in contact with the porous layer as measured from the cross-sectional STEM image.

Table 2 shows the evaluation results of the film thickness and the refractive index and the like of the optical interference layer in the members produced in the exemplary embodiments and the comparative examples together with the glass types and the refractive indices of the substrates used. In Table 2, the layers constituting the optical interference layer are designated as a layer 1, a layer 2, and a layer 3 from the substrate side. In Comparative Example 1, since the optical interference layer is composed of seven layers, the layer farthest from the substrate is designated as the layer 3, and the other six layers are collectively designated.

**[Table 2]**

| | Substrate | | Optical interference layer | | | | | | | | | Entry of particles | | Thickness ratio | |
|---|---|---|---|---|---|---|---|---|---|---|---|---|---|---|---|
| | | | Layer 1 | | | Layer 2 | | | Layer 3 | | | | | | |
| | Type of glass | Refractive index | Material | Refractive index | Thickness [nm] | Material | Refractive index | Thickness [nm] | Material | Refractive index | Thickness [nm] | Presence or absence of entry of particles | Entry thickness [nm] | Porous layer/another layer | Periphery/central portion |
| Exemplary embodiment 1 | S-LAH98 | 1.954 | Polyimide | 1.62 | 79.5 | Porous silica (hollow particles) | 1.19 | 96 | - | - | - | Present | 14 | 1.21 | 1.09 |
| Exemplary embodiment 2 | S-LAH53 | 1.806 | Epoxy | 1.56 | 82.1 | Porous silica (hollow particles) | 1.19 | 102 | - | - | - | Present | 6 | 1.24 | 1.11 |
| Exemplary embodiment 3 | S-TIM28 | 1.689 | Maleimide copolymer | 1.50 | 81.7 | Porous silica (hollow particles) | 1.19 | 105 | - | - | - | Present | 13 | 1.29 | 1.19 |
| Exemplary embodiment 4 | S-NSL5 | 1.522 | Porous silica (chain particles) | 1.45 | 79.2 | Porous silica (hollow particles) | 1.19 | 108 | - | - | - | Present | 10 | 1.36 | 1.04 |
| Exemplary embodiment 5 | L-BAL42 | 1.583 | Maleimide copolymer | 1.46 | 90.2 | Porous silica (hollow particles) | 1.19 | 109 | - | - | - | Present | 11 | 1.21 | 1.19 |
| Exemplary embodiment 6 | S-TIM27 | 1.640 | Maleimide copolymer | 1.48 | 80.5 | Porous silica (hollow particles) | 1.19 | 105 | - | - | - | Present | 14 | 1.30 | 1.19 |
| Exemplary embodiment 7 | S-TIH53 | 1.847 | Polyimide | 1.62 | 80.2 | Porous silica (hollow particles) | 1.23 | 104 | - | - | - | Present | 12 | 1.30 | 1.12 |
| Comparative example 1 | S-LAH98 | 1.954 | SiO₂ / Al₂O₃ / (ZrO₂ + TiO₂) / Al₂O₃ / (ZrO₂ + TiO₂) / Al₂O₃ (vacuum film formation) | | | | | | Porous silica (hollow particles) | 1.24 | 123 | Absent | - | 0.31 | 0.85 |
| Comparative example 2 | S-TIM27 | 1.640 | Maleimide copolymer | 1.50 | 50.4 | Maleimide copolymer | 1.46 | 40.2 | Porous silica (hollow particles) | 1.19 | 103 | Present | 11 | 1.14 | 1.20 |
| Comparative example 3 | S-LAH53 | 1.806 | Porous silica (vacuum film formation) | 1.48 | 21.2 | Epoxy | 1.56 | 49.8 | Porous silica (hollow particles) | 1.21 | 111 | Present | 5 | 1.56 | 1.21 |

Table 3 shows the evaluation results of the optical characteristics and mechanical characteristics of the members produced in the exemplary embodiments and the comparative examples.

**[Table 3]**

| | Optical characteristics | | | | Mechanical characteristics |
|---|---|---|---|---|---|
| | Antireflection performance | | Scattering | Antireflection performance at outer periphery of curved surface | Strength |
| | Half-opening angle 0 degrees | Half-opening angle 45 degrees | | | |
| Exemplary embodiment 1 | A | A | 16 | A | A |
| Exemplary embodiment 2 | A | B | 18 | A | B |
| Exemplary embodiment 3 | A | A | 22 | A | A |
| Exemplary embodiment 4 | B | B | 25 | A | A |
| Exemplary embodiment 5 | A | A | 19 | A | B |
| Exemplary embodiment 6 | A | A | 23 | A | A |
| Exemplary embodiment 7 | A | B | 20 | A | A |
| Comparative example 1 | B | D | 24 | C | B |
| Comparative example 2 | B | C | 19 | B | B |
| Comparative example 3 | A | D | 52 | C | C |

The results in Table 3 showed that the members 1 to 6 used in the exemplary embodiments had a large application range with respect to the opening angle, and the optical elements thus produced had an optical thin film with good optical characteristics and practically sufficient mechanical characteristics. It was also found that the optical elements have a high antireflection effect at the periphery and low scattering and can have practically sufficient performance.

It was confirmed that the members of Comparative Examples 1 to 3 had good optical characteristics and mechanical characteristics but had difficulty in achieving both simultaneously.

### [Second and Third Embodiments]

A member according to the present invention has a substrate and an optical interference layer composed of three layers, and the optical interference layer is provided on at least one main surface of the substrate. The optical interference layer includes a first layer, a second layer on the first layer, and a third layer on the second layer in this order from the substrate side, and optical coherence of these three layers suppresses the reflection of light incident on the member. Such an optical interference layer can be produced by forming the third layer as a porous layer containing inorganic compound particles, forming one of the first layer and the second layer as an organic layer, and forming the other as an inorganic compound layer.

The optical interference layer of the present invention satisfies the following three conditions.
(a) The third layer is a porous layer containing inorganic compound particles.
(b) The optical interference layer is composed of three layers.
(c) All the three layers constituting the optical interference layer are formed by a coating method.

The optical interference layer satisfying the condition (a) can have a smaller refractive index difference between air and the third layer and have a higher degree of freedom in optical design. Consequently, regardless of the material of the substrate, it is possible to suppress reflection on the surface of the member by optical coherence of a small number of layers, that is, the three layers in the condition (b).

Furthermore, since all the three layers constituting the optical interference layer are formed by the same coating method, the thickness of each layer tends to increase toward the periphery of the substrate. A combination of films with the same tendency of increase and decrease in thickness can have a smaller deviation from the optical design value than a combination of films with opposite tendencies of increase and decrease in thickness. Consequently, regardless of the shape of the surface of the member on which the optical interference layer is provided, an antireflection effect can be produced on the entire main surface.

Furthermore, according to the condition (c), the refractive index and the thickness of each layer can be easily adjusted by a coating liquid or coating conditions for forming each layer. For example, when a coating liquid for forming each of the first layer, the second layer, and the third layer is determined, regardless of the material quality (refractive index) of the substrate, it is possible to produce a low-reflection member only by adjusting the coating conditions of the coating liquid for forming each layer to achieve a thickness according to the optical design. This makes easy to follow the change of the substrate and also improves productivity.

The member may have another layer that does not affect optical coherence on the main surface. A layer that does not affect optical coherence is not included in the optical interference layer.

A member according to the present invention can have high antireflection performance regardless of the curvature or diameter of the substrate and can therefore be used as an optical element, such as an optical lens, an optical mirror, a filter, or an optical film. It can also be used for a replica lens, which is one of optical lenses. The replica lens is a lens produced by using a forming die, providing a resin composition between a substrate and the forming die, and polymerizing or copolymerizing the resin composition to form a cured product with a desired shape on the surface of the substrate. The cured product of the resin composition is provided on a transparent substrate, such as glass. The replica lens can easily form a desired surface profile, and it is therefore effective for use as an aspheric lens or a Fresnel lens. The aspheric lens is a general term for lenses with a curvature continuously changing from the center to the periphery thereof. A member according to the present invention is suitable for an optical lens required to have particularly high antireflection performance and can be used for various optical apparatuses. In particular, it is suitable for an optical lens incorporated in an imaging optical system included in an imaging apparatus. When a member according to the present invention is used in an imaging optical system, the reflection of light on the surface of the member is suppressed before light from the outside forms an image on an imaging element through the imaging optical system, thereby improving light transmittance and greatly reducing flare and ghost. This can result in a high-quality image.

When a porous layer with the lowest refractive index is provided as a third layer closest to the air side, the refractive index of each layer for producing the antireflection effect may satisfy any one of the following relational expressions. Here, the refractive index of the first layer is denoted by n₁, the refractive index of the second layer is denoted by n₂, and the refractive index of the third layer is denoted by n₃.

### Relational expression 1: n₃ < n₁ < n₂

### Relational expression 2: n₃ < n₂ < n₁

Although the specific configuration of a member satisfying the relational expression 1 or 2 is described below, the present invention can be appropriately modified without departing from the gist thereof and is not limited to the embodiments described below.

### <Second Embodiment>

A second embodiment describes a member satisfying the relational expression 1, that is, a configuration in which each layer in the optical interference layer has a refractive index satisfying n₃ < n₁ < n₂.

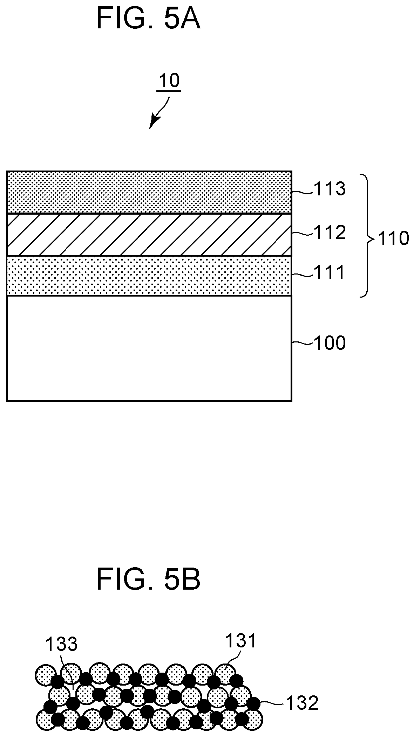

Fig. 5A is a schematic view of a cross-sectional configuration of a member 10 according to the present embodiment. The member 10 includes a substrate 100 and an optical interference layer 110 composed of three layers (111, 112, and 113) on a main surface of the substrate 100. The optical interference layer 110 has a first layer 111, a second layer 112, and a third layer 113 in this order from the substrate 100 side and suppresses the reflection of light incident on the member 10 by optical coherence of these three layers. The first layer 111 is an inorganic compound layer, the second layer 112 is an organic layer, and the third layer 113 is a porous layer containing inorganic compound particles.

The member 10 may have another layer that does not affect optical coherence on the main surface, but the layer that does not affect optical coherence is not included in the optical interference layer.

### (Substrate)

In the present invention, regardless of the material of the substrate 100, the refractive index and/or the thickness of each of the first layer 111, the second layer 112, and the third layer 113 can be adjusted to achieve high antireflection performance. Thus, any material, such as glass, ceramic, resin, metal, or semiconductor, can be used as a material of the substrate 100. It may have any shape and may be a flat sheet, a curved shape with a concave surface or a convex surface, a film, or the like. Depending on the intended use, a light-transmitting substrate may be used.

A composition of glass or ceramic may be zirconium oxide, titanium oxide, tantalum oxide, niobium oxide, hafnium oxide, lanthanum oxide, gadolinium oxide, silicon oxide (silica), calcium oxide, barium oxide, sodium oxide, potassium oxide, boron oxide, aluminum oxide, or the like. The substrate can be produced by grinding and polishing, mold forming, float forming, or another method.

The resin is preferably a thermoplastic resin, a thermosetting resin, or a photocurable resin. The thermoplastic resin may be poly(ethylene terephthalate), poly(ethylene naphthalate) (PET), polypropylene (PP), poly(methyl methacrylate) (PMMA, acrylic resin), cellulose triacetate, polycarbonate (PC), a cycloolefin polymer, poly(vinyl alcohol), or the like. The thermosetting resin may be a polyimide, an epoxy resin, a urethane resin, or the like. The photocurable resin may be of a radical polymerization type of an unsaturated double bond, such as an acryl, or a cationic polymerization type, such as an epoxy.

The metal may be a metal composed of one metal element or an alloy containing two or more metal elements.

The semiconductor may be an elemental semiconductor, such as silicon or germanium, gallium phosphide, indium phosphide, or the like.

### (Third Layer)

First, the third layer is described.

The third layer is provided at a position farthest from the substrate 100 and in contact with air and is preferably a layer that can minimize the refractive index difference between air and the third layer. The refractive index difference between air and the third layer can be reduced to increase the degree of freedom of optical design of the optical interference layer and reduce reflection on the surface of the member by optical coherence of the three layers regardless of the material of the substrate.

Although the third layer preferably has a refractive index n₃ of more than 1.00 and 1.23 or less, considering that it is technically difficult to form a film with a refractive index of less than 1.10, the actual refractive index is 1.10 or more and 1.23 or less, preferably 1.10 or more and 1.21 or less, more preferably 1.15 or more and 1.20 or less. When the third layer has a refractive index n₃ of 1.10 or more and 1.21 or less, a member suitable for use as an optical element can be provided. When the third layer has a refractive index n₃ of 1.15 or more and 1.20 or less, the optical interference layer can have high antireflection characteristics and mechanical strength, which widens the application of the member 10. The refractive index in the present invention is a refractive index at a wavelength of 550 nm.

Although the thickness of the third layer 113 is designed based on the refractive index (porosity) of the third layer 113 and the wavelength of light to be prevented from being reflected, in consideration of the refractive index n₃, the thickness is preferably 50 nm or more and 300 nm or less because a high antireflection effect is produced. The third layer 113 more preferably has a thickness of 70 nm or more and 200 nm or less, still more preferably 90 nm or more and 150 nm or less.

Fig. 5B is a partially enlarged view of the third layer 113. The third layer 113 is a porous layer that contains a plurality of inorganic compound particles 131 bound together by a binder 132 and contains voids 133 between the particles. The refractive index n₃ of the third layer 330 can be adjusted by the materials of the particles 131 and the binder 132 contained in the third layer 330 and by the amount of the voids 133 (porosity). The porosity can be adjusted by the size and shape of the particles and the amount of the binder 132.

The particles 131 can be inorganic compound particles with a refractive index of less than 1.5 in at least part of the visible light region. More specifically, the inorganic compound is preferably any one type of particles selected from the group consisting of silicon oxide (silica), magnesium fluoride, lithium fluoride, calcium fluoride, and barium fluoride, particularly preferably silica particles in consideration of availability. The composition of the particles 131 can be determined by analyzing a cross section of the layer using energy dispersive X-ray analysis (EDX).

Although the particles 131 may be solid particles, cocoon-like particles, barrel-shaped particles, chain-like particles, or hollow particles with internal voids, hollow particles that enable the layer to contain a large number of voids or chain-shaped particles are preferred. Since the refractive index of the third layer 113 is preferably as low as possible, hollow particles are particularly preferred because a film with a low refractive index is easily formed. The chain-like particles refer to secondary particles in which a plurality of primary particles, such as solid particles, are bound and connected in a straight line or in a bent manner.

When the particles 131 are hollow particles, the hollow particles preferably have an average particle size of 15 nm or more and 300 nm or less, more preferably 30 nm or more and 200 nm or less, still more preferably 30 nm or more and 150 nm or less. Particles with an average particle size of 15 nm or more and 300 nm or less can be consistently produced and are less likely to cause scattering due to the formation of large voids between the particles.

The average particle size of the hollow particles is an average value of Feret diameters measured for a plurality of particles. The Feret diameter can be measured from an image (cross-sectional TEM image) obtained by imaging a cross section of the third layer 113 with a transmission electron microscope. The Feret diameter of at least 50 particles can be measured by using commercially available image-processing software, such as Image J (manufactured by NIH), and by adjusting the contrast of the TEM image as required to calculate the average value thereof as the average particle size.

The shell thickness of the hollow particles is preferably 10% or more and 50% or less, more preferably 20% or more and 35% or less, of the average particle size. Particles with a shell thickness in this range are less likely to break during film formation due to insufficient particle strength, the proportion of voids in each particle decreases, and the effect of lowering the refractive index is less likely to decrease. The shell thickness of the hollow particles can also be measured from a cross-sectional TEM image. The shell thicknesses of a plurality of particles can be measured to determine the average value thereof.

When the particles 131 are chain-like particles, the primary particles constituting each chain-like particle may have a spherical shape, a cocoon shape, or a barrel shape, and the long diameter of the particles is particularly preferably 1 time or more and 3 times or less the short diameter thereof. The thickness of each chain-like particle corresponds to the average particle size of the primary particles, and the average particle size can be determined by measuring the Feret diameters of at least 50 primary particles in a cross-sectional TEM image and averaging the Feret diameters.

The average particle size of the primary particles constituting each chain-like particle is preferably 8 nm or more and 20 nm or less. There is no risk that an average particle size of 8 nm or more and 20 nm or less results in an excessive increase in the surface area of the voids in the third layer 113, uptake of moisture or chemical substances from the atmosphere, or a change in the optical characteristics of the third layer 130. Furthermore, there is no concern that the average particle size becomes too large, the dispersion of the chain-like particles in a solvent of a coating liquid for forming the third layer 130 becomes unstable, the coatability deteriorates, and a layer with uniform physical properties cannot be formed.

The average particle size of the chain-like particles is preferably 3 times or more and 10 times or less, more preferably 4 times or more and 8 times or less, the average particle size of the primary particles. When the average particle size of the chain-like particles is 3 times or more and 10 times or less the average particle size of the primary particles, the porosity is sufficient to adequately reduce the refractive index of the porous layer, and there is no risk of the viscosity of the coating liquid becoming too high. Furthermore, there is no risk that voids formed between particles become large to scatter light and reduce transparency and that the coatability and the leveling property are deteriorated. The average particle size of the chain-like particles corresponds to the Feret diameter of secondary particles and can be determined by measuring the Feret diameters of at least 50 chain-like particles from a cross-sectional TEM image and averaging the Feret diameters.

When the particles 131 are primary particles of solid particles, the average particle size preferably ranges from 5 nm or more and 300 nm or less, more preferably 5 nm or more and 150 nm or less, still more preferably 5 nm or more and 100 nm or less. When the average particle size is 5 nm or more and 300 nm or less, it is possible to suppress an increase in the refractive index of the third layer 113 and an increase in scattering. The average particle size of solid particles can also be determined from a cross-sectional TEM image of the layer in the same manner as particles of other shapes.

The binder 132 for binding particles together can be an inorganic compound with the same quality as the particles 131. The use of the inorganic compound with the same quality as the particles 131 can increase the affinity between the materials and produce a strong binding force with a small amount of the inorganic compound. This results in a lower refractive index than in the case of using a resin binder with a low affinity for the particles 131.

When the particles 131 are silica particles, the binder 132 is preferably a silicon oxide compound. A preferred example of the silicon oxide compound is a cured product of a silicon oxide oligomer produced by hydrolysis and condensation of a silicate.

The binder 132 content of the third layer 113 is preferably 0.2 parts by mass or more and 20 parts by mass or less, more preferably 1 part by mass or more and 20 parts by mass or less, per 100 parts by mass of the total inorganic components (solid components) in the third layer 113. When the binder 132 content is in this range, it is possible to suppress the formation of a film with low scratch resistance due to a small ratio of the binder to the particles or suppress a decrease in porosity and an increase in refractive index due to a high binder content. Furthermore, when the third layer 113 is formed, this can also suppress the disruption of the arrangement of the particles 131 by a component to be a binder in the coating liquid, which would otherwise worsen the scattering of visible light in the resulting film.

### (Second Layer)

The second layer 112 is a layer with the highest refractive index among the three layers constituting the optical interference layer.

The second layer 112 is preferably an organic layer containing a polymer, such as polyimide, acryl, or epoxy, which can achieve a refractive index of 1.5 or more, and a resin with an aromatic ring or an imide ring in the main chain or a resin containing a maleimide copolymer is particularly preferred. Due to an aromatic ring or an imide ring with a planar structure, molecular chains are easily oriented parallel to the substrate during film formation, and a layer with highly uniform thickness and refractive index can be formed even when the thickness is hundreds of nanometers or less as in an organic layer of the present invention.

The second layer 112 preferably has a refractive index n₂ of 1.55 or more and 2.00 or less. A refractive index n₂ of 1.55 or more and 2.00 or less can result in a high antireflection effect due to coherence. The refractive index n₂ is more preferably 1.57 or more and 1.95 or less, still more preferably 1.60 or more and 1.90 or less.

The thickness of the second layer 112 may be determined by optical design based on the refractive index n₂, the wavelength of light to be prevented from being reflected, and the relationship with the first layer 111 and the third layer 113. In consideration of a preferred range of the refractive index n₂, 15 nm or more and 100 nm or less is preferred because a high antireflection effect can be produced. The second layer 112 preferably has a thickness of 20 nm or more and 70 nm or less, more preferably 25 nm or more and 50 nm or less.

A configuration in which an organic layer is disposed as the second layer 112, that is, a configuration in which a layer formed of an organic material with a low affinity for an inorganic material is provided between layers formed of the inorganic material, is particularly preferred in the present invention in which an optical interference layer is formed by a coating method. Even when the next coating liquid is applied in a state where the previously applied coating liquid is not cured, solid components in the coating liquids rarely mix with each other due to a low affinity between the solid components and can remain in a separated state in the respective coating liquids. This eliminates the need for a step of curing a coating film every time the coating film is formed from a coating liquid, and the coating step can be continuously performed to improve the production efficiency.

Such a continuous coating method can also have an effect of enhancing the interlayer adhesiveness.

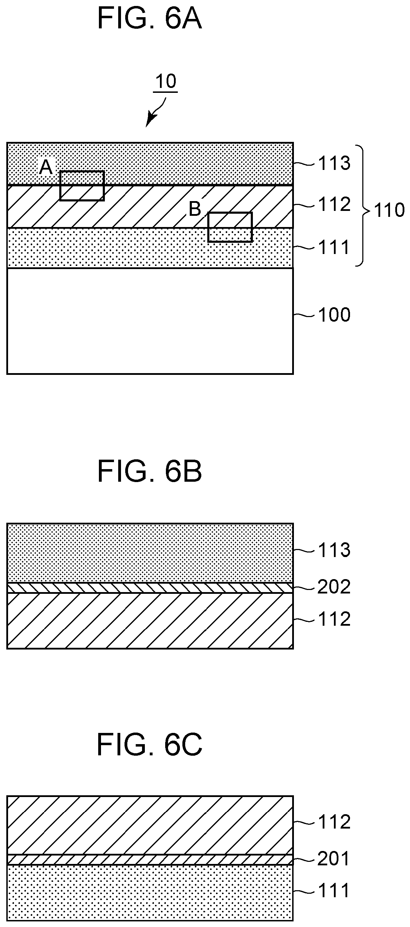

Fig. 6A is a schematic view of a cross-sectional configuration of a member produced by continuously applying a coating liquid to form three layers without curing the coating liquid. Figs. 6B and 6C are enlarged schematic views of a region A including an interface between the second layer 112 and the third layer 113 and a region B including an interface between the first layer 111 and the second layer 112, respectively, in Fig. 6A. When a coating liquid for each layer is continuously applied, a first mixture layer 201 containing a component contained in the first layer 111 and a component contained in the second layer 112 is formed between the first layer 111 and the second layer 112. Likewise, a second mixture layer 202 containing a component contained in the second layer 112 and a component contained in the third layer 113 is formed between the second layer 112 and the third layer 113.

Depending on the components and the combination of the coating liquids to be used, the first mixture layer 201 and the second mixture layer 202 each have a thickness of 2 nm or more and less than 15 nm and can enhance the interlayer adhesiveness. Although the first mixture layer 201 and the second mixture layer 202 each having a thickness of 15 nm or more may affect the optical interference layer, the thickness cannot be 15 nm or more due to a low affinity between the solid components in the coating liquids to be continuously applied. To further improve the adhesion strength between the layers, each mixture layer preferably has a thickness of 5 nm or more and less than 15 nm. The thickness of each mixture layer can be adjusted by the degree of drying of the previously applied coating liquid.

### (First Layer)

The first layer 111 is an inorganic compound layer with a refractive index n₁ that is higher than the refractive index n₃ of the third layer and lower than the refractive index n₂ of the second layer 112. The first layer 111 may be a porous layer in which a plurality of inorganic compound particles are bound together by a binder, or an inorganic compound layer containing no particles or voids.

The first layer 111 preferably has a refractive index n₁ of 1.60 or less. A refractive index of 1.60 or less can result in a decrease in the refractive index difference between the substrate 100 and the first layer 111 and a sufficient reflection reducing effect. The first layer 111 preferably has a refractive index n₁ of 1.10 or more and 1.60 or less, more preferably 1.15 or more and 1.55 or less, still more preferably 1.17 or more and 1.45 or less, particularly preferably 1.17 or more and 1.40 or less.

The thickness of the first layer 111 may be determined by optical design based on the refractive index n₁, the wavelength of light to be prevented from being reflected, and the relationship with the second layer 112 and the third layer 113. From the above preferred range of the refractive index n₁, 15 nm or more and 100 nm or less is preferred because a high antireflection effect can be expected. The first layer 111 more preferably has a thickness of 20 nm or more and 70 nm or less, still more preferably 25 nm or more and 50 nm or less.

The refractive index n₁ of the first layer 111 can be adjusted by a material of the first layer 111 and by the amount of voids (porosity) included in the layer. More specifically, voids formed between particles can be adjusted depending on whether or not the particles are added to the first layer 111 and, when the particles are added, depending on the shape, amount, and type of the particles.

To adjust the refractive index n₁ of the first layer 111 to be in the range of 1.10 or more and 1.55 or less, particles may be added to form a porous layer. As in the third layer 113, the porous layer can be a layer in which a plurality of inorganic compound particles are bound together by a binder. As in the third layer 113, the particles to be used may be solid, cocoon-like, barrel-shaped, hollow, or chain-like inorganic compound particles. The inorganic compound particles are in a state of being easily treated in advance so that a desired function can be imparted by modifying the surface thereof. As in the third layer 113, the binder can be an inorganic material with the same quality as the particles. The refractive index n₁ can be adjusted by a material of the particles and the binder and by the amount of voids (porosity).

To adjust the refractive index n₁ of the first layer 111 to be in the range of 1.55 or more and 1.60 or less, it is possible to use an inorganic compound layer to which particles are not added and that does not substantially contain voids. The inorganic compound can have a refractive index of 1.60 or less in at least part of the visible light region. More specifically, a metal oxide, a metal fluoride, or a metal nitride is preferred, and an oxide is particularly preferred. More specifically, aluminum oxide, zirconium oxide, silicon oxide, titanium oxide, or zinc oxide is preferred. The composition of the inorganic compound in the first layer 111 can be determined by analyzing a cross section of the first layer 111 using energy dispersive X-ray analysis (EDX). When inorganic compound particles are added to the first layer 111 and the third layer 113 to form a porous layer, the surface of the inorganic compound particles can be modified for the purpose of imparting a desired function. More specifically, to enhance the arrangement of the inorganic compound particles or to prevent the optical performance from changing in a high-humidity environment, for example, the surface treatment may be performed to suppress the adsorption of chemical contaminants or moisture. A treatment method for modifying the surface can be, for example, a method of directly adding a component for surface treatment to a coating liquid in which particles are dispersed or a method of performing surface treatment by exposure to the atmosphere after film formation. When the surface treatment is performed by exposure to the atmosphere after film formation, the surface treatment may be performed for each layer, or the surface treatment may be collectively performed after the formation of all the layers. The surface treatment is, for example, hydrophobization or hydrophilization. Specific examples of the hydrophobization include the addition of a fluoromethyl group or a methyl silyl group to the surface of the inorganic compound particles. A hydrophobized particle surface can suppress the adsorption of chemical contaminants or moisture.

### (Other Layers)

Another layer that does not affect optical coherence has, for example, a configuration including a functional layer on the surface of the third layer 113 opposite the substrate 100 or a configuration including an underlying layer between the substrate 100 and the first layer 111. Such a layer has a thickness of less than 15 nm, which does not affect optical coherence.

The functional layer is a layer for imparting functionality to the member, such as an antifouling layer, a hydrophilic layer, or an adhesive layer. The antifouling layer is preferably a layer containing a fluoropolymer, a fluorosilane monolayer, a layer containing titanium oxide particles, or the like. The hydrophilic layer is preferably a hydrophilic polymer layer, particularly preferably a layer containing a polymer with a zwitterionic hydrophilic group, such as a sulfobetaine group, a carbobetaine group, or a phosphorylcholine group. The adhesive layer desirably has high transmittance after curing and is suitably an acrylic resin, an epoxy resin, or the like.

The underlying layer has an effect of preventing diffusion of impurities from the substrate 100 and increasing the adhesion between the substrate 100 and the first layer 111. The underlying layer may be an inorganic compound, such as an oxide, a nitride, or a fluoride, a polymer layer, or the like.

### (Method for Producing Member)

The method for producing a member includes the following steps.
(1) Step of preparing a substrate
(2) Step of applying a first coating liquid to a substrate to form a first coating film
(3) Step of applying a second coating liquid to the first coating film to form a second coating film
(4) Step of applying a third coating liquid to the second coating film to form a third coating film
(5) Step of curing the third coating film

Each step is described below.

### (1) Step of preparing substrate

First, the substrate 100 is prepared. If necessary, the substrate 100 may be subjected to solvent cleaning, UV cleaning, or the like.

### (2) Step of applying first coating liquid to substrate to form first coating film

First, a first coating liquid 11 (hereinafter referred to as a coating liquid 11) for forming the first layer is described. In the following, description of the matters already described may be omitted. The coating liquid when the first layer 111 is a porous layer is hereinafter referred to as a coating liquid 11-1, and the coating liquid when the first layer 111 is an inorganic compound layer containing substantially no voids is hereinafter referred to as a coating liquid 11-2. The coating liquids 11-1 and 11-2 are collectively referred to as the coating liquid 11.

When the first layer 111 is a porous layer, the coating liquid 11-1 contains inorganic compound particles and a component to be the binder, which constitute the first layer 111, and a solvent. The solvent can be an organic solvent or water but, for a coating liquid to be applied by a spin coating method, is preferably an organic solvent from the perspective that a uniform coating film can be formed. Although a coating liquid in which an organic solvent and water are mixed may be used, the water content is preferably lower than the organic solvent content. The water content is preferably 0.1 parts by mass or more and 20 parts by mass or less, more preferably 0.5 parts by mass or more and 15 parts by mass or less, per 100 parts by mass of the solvent component of the coating liquid 11-1. When the water content is less than 0.1 parts by mass per 100 parts by mass of the solvent component, it is difficult to use a particle slurry dispersed in water as it is for the coating liquid 11-1, and the coating liquid is used after water is once removed by solvent replacement, distillation, or the like, so that there is a concern that the cost of the coating liquid increases and the production process becomes complicated. When the water content is more than 20 mass per 100 parts by mass of the solvent component, it may be difficult to form a uniform coating film, radial coating unevenness may occur, or the liquid is likely to accumulate at an end portion of the substrate, which may make it difficult to form a uniform coating film.

The material, shape, and size of the particles in the coating liquid 11-1 are as described above. The average particle size of the particles in the coating liquid 11-1 can be calculated by extracting the particles from the coating liquid 11-1, washing the particles, drying the washed particles, taking a TEM image of the dried particles, measuring the Feret diameters of 50 or more particles, and averaging the Feret diameters.

The binder that binds the particles together is preferably an inorganic material of the same quality as the particles. When silica particles are used as the particles, the binder is preferably silica, and the component to be the binder is preferably a silicon oxide compound. When all the solid components (solutes) in the coating liquid 11-1 are inorganic materials, this reduces the affinity for solid components in the second coating liquid forming the second layer. Thus, even when the second coating liquid is applied before the coating liquid 11-1 is cured, the solutes are maintained in a substantially separated state, and individual layers can be formed. A preferred example of the silicon oxide compound is a silicon oxide oligomer produced by hydrolysis and condensation of a silicate.

Although the silica particles originally have silanol (Si-OH) groups on the surface, the number of silanol groups on the surface can be increased by mixing with a silicon oxide oligomer in the coating liquid. This makes it more easier for the surfaces of the particles to bond to each other. When the coating liquid 11-1 is applied and then cured, the plurality of particles can be bound together by a cured product of the silicon oxide oligomer and form a film with high mechanical strength.

The amount of the component to be the binder in the coating liquid 11-1 is preferably 0.2 parts by mass or more and 20 parts by mass or less per 100 parts by mass of the solid component contained in the coating liquid 11-1. It is more preferably 1 part by mass or more and 15 parts by mass or less, still more preferably 3.0 parts by mass or more and 15 parts by mass or less. When the amount of the component to be the binder is 0.2 parts by mass or more and 20 parts by mass or less, it is possible to suppress a decrease in mechanical strength due to a decrease in binding between particles and suppress an increase in refractive index due to an increase in the amount of the component to be the binder. This can also suppress the component to be the binder disrupting particle arrangement, which would otherwise worsen the scattering of visible light in the resulting film.

The organic solvent used for the coating liquid 11-1 may be any solvent as long as the particles do not aggregate during the process and the coating liquid 11-1 does not rapidly thicken. When the state in which the particles in the coating liquid 11-1 are uniformly dispersed can be maintained, a first coating film in which the particles are uniformly distributed on the substrate can be formed. In contrast, when the particles in the coating liquid 11-1 are present in an aggregated state, the aggregated particles are applied to the substrate, and a desired refractive index cannot be achieved due to disturbance in the arrangement.

Specific examples of the organic solvent include the following: a monohydric alcohol, such as methanol, ethanol, 1-propanol, 2-propanol, 1-butanol, 2-butanol, 2-methylpropanol, 1-pentanol, 2-pentanol, cyclopentanol, 2-methylbutanol, 3-methylbutanol, 1-hexanol, 2-hexanol, 3-hexanol, 4-methyl-2-pentanol, 2-methyl-1-pentanol, 2-ethylbutanol, 2,4-dimethyl-3-pentanol, 3-ethylbutanol, 1-heptanol, 2-heptanol, 1-octanol, or 2-octanol; a dihydric or polyhydric alcohol, such as ethylene glycol or triethylene glycol; an ether alcohol, such as methoxyethanol, ethoxyethanol, propoxyethanol, isopropoxyethanol, butoxyethanol, 1-methoxy-2-propanol, 1-ethoxy-2-propanol, 1-propoxy-2-propanol, or 3-methoxy-1-butanol; an ether, such as dimethoxyethane, diglyme (diethylene glycol dimethyl ether), tetrahydrofuran, dioxane, diisopropyl ether, dibutyl ether, or cyclopentyl methyl ether; an ester, such as ethyl formate, ethyl acetate, n-butyl acetate, methyl lactate, ethyl lactate, ethylene glycol monomethyl ether acetate, ethylene glycol monoethyl ether acetate, ethylene glycol monobutyl ether acetate, or propylene glycol monomethyl ether acetate; an aliphatic or an alicyclic hydrocarbon, such as n-hexane, n-octane, cyclohexane, cyclopentane, or cyclooctane; an aromatic hydrocarbon, such as toluene, xylene, or ethylbenzene; a ketone, such as acetone, methyl ethyl ketone, methyl isobutyl ketone, cyclopentanone, or cyclohexanone; a chlorinated hydrocarbon, such as chloroform, methylene chloride, carbon tetrachloride, or tetrachloroethane; or an aprotic polar solvent, such as N-methylpyrrolidone, N,N-dimethylformamide, N,N-dimethylacetamide, or ethylene carbonate; or the like. Two or more of these solvents may be used in combination.

From the perspective of particle dispersibility and coatability, 30% or more of the organic solvent in the first coating liquid 11-1 is preferably a water-soluble solvent having a hydroxy group with 4 or more and 6 or less carbon atoms. In particular, a solvent containing one or more selected from the group consisting of ethoxyethanol, propoxyethanol, isopropoxyethanol, butoxyethanol, 1-methoxy-2-propanol, 1-ethoxy-2-propanol, 1-propoxy-2-propanol, 3-methoxy-1-butanol, and ethyl lactate is particularly preferred. Furthermore, the coating liquid 11-1 may contain a surface treatment agent for the purpose of improving the dispersibility and temporal stability of the particles and imparting a desired function. Specific examples thereof include acids and the like, and fluorine-containing organic acids with two or more acidic groups on the surface thereof are more preferred. When silica particles are used, the silica particles to which a fluorine-containing organic acid with two or more acidic groups on the surface thereof is added can be used to form a coating film in a state where the silica particles are aligned and deposited without disturbance in the arrangement of the silica particles. Since the acidic groups modify the particles, for example, when there are two acidic groups, it is assumed that one acid can modify two adjacent particles. Thus, the particles can be bonded together through an acid with two or more acidic groups and have an increased number of bonds therebetween, thus forming a film with high strength. Furthermore, silica particles to which a fluorine-containing organic acid is added can be used to suppress the adhesion of chemical contaminants or moisture and suppress the change in optical performance in a high-humidity environment. Chemical contaminants are assumed to generate both from the outside of a substrate with an optical interference layer and from the inside of the substrate with the optical interference layer but can be suppressed in both cases. This can suppress the change in optical performance in a high-humidity environment regardless of the material of the member. Specific examples of the fluorine-containing organic acid with two or more acidic groups on the surface thereof include tetrafluorosuccinic acid, hexafluoroglutaric acid, octafluoroadipic acid, dodecafluorosuberic acid, and hexadecafluorosebacic acid. The fluorine-containing organic acid with two or more acidic groups on the surface thereof is preferably contained in the range of 0.01 parts by mass or more and 10 parts by mass or less, more preferably 0.1 parts by mass or more and 5 parts by mass or less, per 100 parts by mass of the particles. When the amount of the fluorine-containing organic acid with two or more acidic groups on the surface thereof is less than 0.01 parts by mass, moisture or chemical contaminants may be easily adsorbed to the particles. When the amount of the fluorine-containing organic acid with two or more acidic groups on the surface thereof is more than 10 parts by mass, because the acidic groups have different acidities, there is a concern that the reaction of a first acidic group is promoted due to the excessive amount and may not contribute to the bonding between the particles. Thus, moisture or chemical contaminants are likely to be adsorbed in some cases. Furthermore, the film may have lower strength. Furthermore, the film may have lower strength.

When the first layer 111 is an inorganic compound layer containing substantially no voids, the coating liquid 11-2 contains an inorganic compound component (solid component) constituting the first layer 111 and a solvent. The solvent can be an organic solvent or water but, for a coating liquid to be applied by a spin coating method, is preferably an organic solvent from the perspective that a uniform coating film can be formed.

An inorganic compound component in the coating liquid 11-2 is preferably a metal alkoxide. The metal alkoxide may be a zirconium alkoxide, a silicon alkoxide, a titanium alkoxide, a zinc compound, or an aluminum compound.

The zirconium alkoxide is, for example, zirconium tetramethoxide, zirconium tetraethoxide, zirconium tetra-n-propoxide, zirconium tetraisopropoxide, or zirconium tetra-n-butoxide.

The silicon alkoxide is, for example, one with a lower alkyl group.

The zinc compound is, for example, zinc acetate, zinc chloride, zinc nitrate, zinc stearate, zinc oleate, or zinc salicylate, particularly zinc acetate or zinc chloride.

The aluminum compound may be aluminum ethoxide, aluminum isopropoxide, aluminum-n-butoxide, aluminum-sec-butoxide, aluminum-tert-butoxide, aluminum acetylacetonate, an oligomer thereof, aluminum nitrate, aluminum chloride, aluminum acetate, aluminum phosphate, aluminum sulfate, aluminum hydroxide, or the like.

The organic solvent in the coating liquid 11-2 may be any solvent that does not cause precipitation of an alkoxide of a metal, such as zirconium, silicon, titanium, zinc, or aluminum, and does not cause rapid thickening of the coating liquid 11-2 during the process.

Specific examples thereof include the following organic solvents. An alcohol, such as methanol, ethanol, 2-propanol, butanol, ethylene glycol, or ethylene glycol mono-n-propyl ether; an aliphatic or alicyclic hydrocarbon, such as n-hexane, n-octane, cyclohexane, cyclopentane, or cyclooctane; an aromatic hydrocarbon, such as toluene, xylene, or ethylbenzene; an ester, such as ethyl formate, ethyl acetate, n-butyl acetate, ethylene glycol monomethyl ether acetate, ethylene glycol monoethyl ether acetate, or ethylene glycol monobutyl ether acetate; a ketone, such as acetone, methyl ethyl ketone, methyl isobutyl ketone, or cyclohexanone; an ether, such as dimethoxyethane, tetrahydrofuran, dioxane, or diisopropyl ether; a chlorinated hydrocarbon, such as chloroform, methylene chloride, carbon tetrachloride, or tetrachloroethane; or an aprotic polar solvent, such as N-methylpyrrolidone, dimethylformamide, dimethylacetamide, or ethylene carbonate. Two or more of these solvents may be used in combination.

When used as a raw material, a metal alkoxide may have high reactivity with water and may be rapidly hydrolyzed by moisture in the air or by the addition of water. Thus, it is also preferred to add a stabilizer to the coating liquid 11-2 to suppress rapid hydrolysis. The stabilizer may be a β-diketone compound, such as acetylacetone, dipivaloylmethane, trifluoroacetylacetone, hexafluoroacetylacetone, benzoylacetone, or dibenzoylmethane; a β-keto ester compound, such as methyl acetoacetate, ethyl acetoacetate, allyl acetoacetate, benzyl acetoacetate, iso-propyl acetoacetate, tert-butyl acetoacetate, iso-butyl acetoacetate, 2-methoxyethyl acetoacetate, or 3-keto-n-valeric acid methyl; or an alkanolamine, such as monoethanolamine, diethanolamine, or triethanolamine.

A method for applying the coating liquid 11 to the substrate 100 may be any method that can be controlled to have a desired film thickness. Specific examples thereof include a spin coating method, a blade coating method, a roll coating method, a slit coating method, a printing method, a gravure coating method, and a dip coating method. To produce an article with a three-dimensionally complicated shape, such as a concave surface, a spin coating method is particularly preferred because a coating film with a uniform thickness is easily formed. In the spin coating method, the rotational speed, the concentration of a solid component in the coating liquid 11, or the like can be adjusted to control the film thickness.

### (3) Step of applying second coating liquid to first coating film to form second coating film

A second coating liquid 12 for forming the second layer (hereinafter referred to as a coating liquid 12) contains a polymer component (solid component) constituting the second layer 112, and a solvent. The solvent is preferably an organic solvent.

The polymer component may be a composition with an aromatic ring or an imide ring or a composition containing a maleimide copolymer. The aromatic ring and the imide ring have a planar structure, and molecular chains in a composition with such a structure tend to be oriented parallel to the substrate during film formation. Thus, a layer with a highly uniform thickness and refractive index can be formed even if the layer has a thickness of hundreds of nanometers or less as in an organic layer of the present invention.

The organic solvent is preferably a solvent in which a polymer is dissolved and the coating liquid 12 is not rapidly thickened. Such a solvent may be a ketone, such as 2-butanone, methyl isobutyl ketone, cyclopentanone, or cyclohexanone; an ester, such as ethyl acetate, n-butyl acetate, ethylene glycol monomethyl ether acetate, propylene glycol monomethyl ether acetate, ethyl lactate, or γ-butyrolactone; an ether, such as tetrahydrofuran, dioxane, diisopropyl ether, dibutyl ether, cyclopentyl methyl ether, or diglyme; an aromatic hydrocarbon, such as toluene, xylene, or ethylbenzene; a chlorinated hydrocarbon, such as chloroform, methylene chloride, or tetrachloroethane; or N-methylpyrrolidone, N,N-dimethylformamide, N,N-dimethylacetamide, dimethyl sulfoxide, or sulfolane. Furthermore, an alcohol, such as 1-butanol, 1-ethoxy-2-propanol, methyl cellosolve, or methoxypropanol, may also be used in combination. These solvents may be used alone or in combination.

The coating liquid 12 can be applied in the same manner as in the step of applying the coating liquid 11. As described above, all the solid components in the coating liquid 11 are inorganic materials and have a low affinity for an organic material that is a solid component in the coating liquid 12. Thus, after the coating liquid 11 is applied to form the first coating film, the coating liquid 12 can be applied to the first coating film without curing the first coating film. The term "curing", as used herein, means that the change in refractive index after 24 hours from evaporation of the organic solvent contained in the coating liquid is 0.01 or less.

When the coating liquid 12 is applied without curing the first coating film, a region in which the polymer in the coating liquid 12 slightly enters from the surface of the first coating film is formed, and these are then cured together. At the interface between the first layer 111 and the second layer 112 of the optical interference layer thus formed, as illustrated in Fig. 6C, the first mixture layer 201 of 2 nm or more and less than 15 nm containing a component contained in the first layer 111 and a component contained in the second layer 112 is formed. The first mixture layer 201 has a small thickness and does not function as an optical interference layer but has an effect of enhancing the adhesion between the first layer 111 and the second layer 112. The first mixture layer 201 with a thickness of 5 nm or more and less than 15 nm is preferred due to further enhanced adhesion strength.

The thickness of the first mixture layer 201 can be reduced by performing a step of removing part of the organic solvent contained in the first coating film before the step of applying the coating liquid 12.

When the first mixture layer 201 is not formed, the coating liquid 12 may be applied after the first coating film is cured.

### (4) Step of applying third coating liquid to second coating film to form third coating film

A third coating liquid 13 for forming the third layer (hereinafter referred to as a coating liquid 13) contains inorganic compound particles and a component to be the binder (solid component), which constitute the third layer 113, and an organic solvent. The inorganic compound particles in the coating liquid 13 and the inorganic compound particles or the inorganic compound component in the coating liquid 11 may have the same composition or different compositions. The organic solvent in the coating liquid 13 is desirably different from that contained in the coating liquid 12.

The material, shape, and size of the particles in the coating liquid 13 are as described above. The average particle size of the particles in the coating liquid 13 can be calculated by extracting the particles from the coating liquid 13, washing the particles, drying the washed particles, taking a TEM image of the dried particles, measuring the Feret diameters of 50 or more particles, and averaging the Feret diameters.

The component to be the binder and the organic solvent may be the same as those contained in the coating liquid 11-1.

The step of applying the coating liquid 13 can be performed in the same manner as the step of applying the coating liquid 11. The solid component in the coating liquid 12 is an organic material and is therefore has a low affinity for the solid component in the coating liquid 13. Thus, after the coating liquid 12 is applied to form the second coating film, the coating liquid 13 can be continuously applied to the second coating film to form a third coating film without curing the second coating film.

When the coating liquid 13 is applied without curing the second coating film, a region in which particles in the coating liquid 13 slightly enter from the surface of the second coating film is formed, and these are then cured together. At the interface between the second layer 112 and the third layer 113 of the optical interference layer thus formed, as illustrated in Fig. 6A, the second mixture layer 202 of 2 nm or more and less than 15 nm containing a component contained in the second layer 112 and a component contained in the third layer 113 is formed.

The second mixture layer 202 has a small thickness and does not function as an optical interference layer but has an effect of enhancing the adhesion between the second layer 112 and the third layer 113. The second mixture layer 202 with a thickness of 5 nm or more and less than 15 nm is preferred due to further enhanced adhesion strength.

The thickness of the second mixture layer 202 can be reduced by performing a step of drying the organic solvent contained in the second coating film before the step of applying the coating liquid 13.

When the second mixture layer 202 is not formed, the coating liquid 13 may be applied to form the third coating film after the second coating film is cured.

### (5) Step of curing third coating film

After the coating liquid 13 is applied to the substrate 100 to form the third coating film, the solvent is removed from at least the third coating film for curing. When the first coating film to the third coating film are continuously formed without performing the curing step in the middle, the first coating film to the third coating film are cured together in this step.

In this step, curing is preferably performed at 20°C or more and 200°C or less, depending on the heat resistance temperature of the substrate 100. The curing time may be any time during which the solvent in the coating film can be removed without affecting the substrate 100. A method of curing the coating film may be heating with an oven or a hot plate or may be curing over time without active heating.

### <Third Embodiment>

As a third embodiment, a member satisfying the relational expression 2, that is, a configuration in which each layer in the optical interference layer has a refractive index satisfying n₃ < n₂ < n₁ is described below.

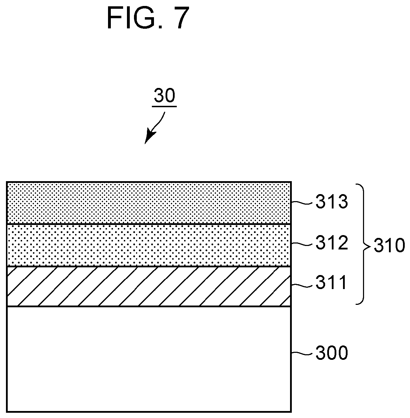

Fig. 7 is a schematic view of a cross section of a member 30 according to the present embodiment. The member 30 includes a substrate 300 and an optical interference layer 310 composed of three layers (311, 312, and 313) on one main surface of the substrate 300. The optical interference layer 310 has a first layer 311, a second layer 312, and a third layer 313 in this order from the substrate 300 side and suppresses the reflection of light incident on the member 30 by optical coherence of these three layers. The member 30 may have another layer that does not affect optical coherence on the main surface, but the layer that does not affect optical coherence is not included in the optical interference layer.

The substrate and the third layer are the same as those in the first embodiment and are not described here.

### (Second Layer)

The second layer 312 is a layer with a refractive index n₂ that is higher than the refractive index n₃ of the third layer 313 and lower than the refractive index n₁ of the first layer 311. The second layer 312 preferably has a refractive index n₂ of 1.25 or more and 1.65 or less, more preferably 1.27 or more and 1.60 or less, still more preferably 1.30 or more and 1.57 or less. In this range, the optical interference effect can be utilized to sufficiently reduce reflection on the surface of the member 30.

The second layer 312 can be the same as the first layer 111 in the second embodiment. More specifically, it may be a porous layer in which a plurality of inorganic compound particles are bound together by a binder, or an inorganic compound layer containing no particles or voids.

As in the first layer 111 of the first embodiment, the refractive index n₂ of the second layer 312 can be adjusted by materials of the particles and the binder contained in the second layer 312 and the porosity.

The thickness of the second layer 312 may be determined by optical design based on the refractive index n₂, the wavelength of light to be prevented from being reflected, and the relationship with the first layer 312 and the third layer 313. From the above preferred range of the refractive index n₂, 15 nm or more and 100 nm or less is preferred because a high antireflection effect can be expected. The first layer 111 more preferably has a thickness of 20 nm or more and 70 nm or less, still more preferably 25 nm or more and 50 nm or less.

The present embodiment is different from the second embodiment in that the second layer 312 and the third layer 313 formed thereon are both layers formed of an inorganic material and have a high affinity for each other. Thus, when a coating liquid for forming the second layer 312 is applied and then a coating liquid for forming the third layer 313 is applied in a state where the coating liquid is not cured, solid components of the respective coating liquids may be mixed and integrated.

As is described in detail later, a step of curing a coating film of the coating liquid for forming the second layer 312 is performed between the step of applying the coating liquid for forming the second layer 312 and the step of applying the coating liquid for forming the third layer 313.

Since an organic layer is provided as the first layer 311, a configuration in which an inorganic compound layer is disposed as the second layer 312 is preferred in the present invention in which an optical interference layer is formed by a coating method. An inorganic compound contained in the second layer 312 (a solid component in the coating liquid for forming the second layer) has a low affinity for an organic substance contained in the first layer 311 (a solid component in a coating liquid for forming the first layer). Thus, when the second layer 312 is formed, even if the coating liquid of the second layer 312 is applied on the coating liquid of the first layer 311 in a state where the coating liquid of the first layer 311 is not cured, the solid components are mixed only in the vicinity of the interface and can remain in a separated state. Due to high production efficiency, preferably, the coating liquid for forming the second layer 312 can be continuously applied without performing the curing step after the coating liquid for forming the first layer 311 is applied.

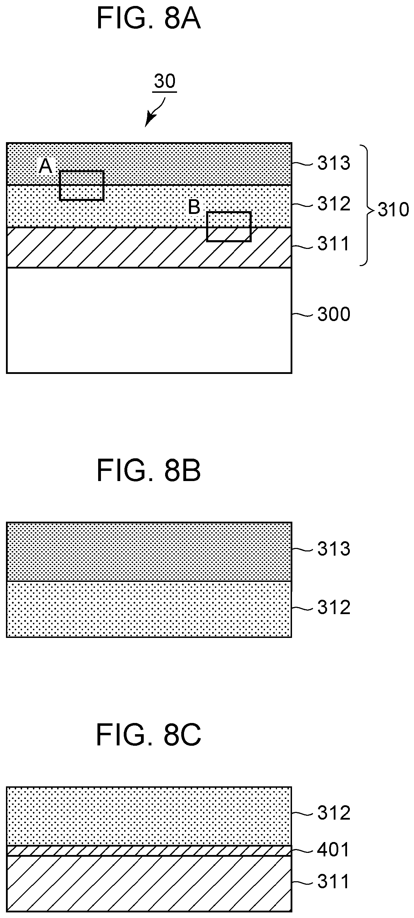

Fig. 8A illustrates a member produced by continuously applying the coating liquid for forming the second layer 312 without curing the coating liquid for forming the first layer 311. Figs. 8B and 8C are enlarged views of a region A including an interface between the second layer 312 and the third layer 313 and a region B including an interface between the first layer 311 and the second layer 312, respectively, in the member illustrated in Fig. 8A. A mixture layer 401 containing a component contained in the first layer 311 and a component contained in the second layer 312 is formed at the interface between the first layer 311 and the second layer 312 and improves adhesiveness. However, the coating liquid for forming the third layer 313 is applied after the coating film of the coating liquid for forming the second layer 312 is cured, and a mixture layer is therefore not formed at the interface between the second layer 312 and the third layer 313.

In the present embodiment, although a mixture layer is not formed at the interface between the second layer 212 and the third layer 213, both the second layer 312 and the third layer 313 are formed of an inorganic compound, have a high affinity for each other, and do not cause an adhesion problem.

### (First Layer)

The first layer 311 preferably has a refractive index n₁ of 1.55 or more and 2.00 or less, more preferably 1.57 or more and 1.95 or less, still more preferably 1.60 or more and 1.90 or less. A refractive index of 1.55 or more and 2.00 or less can result in a sufficient reflection reduction effect due to interference of reflected light at the interface with the substrate 300 and at the interface with the second layer 312.

The first layer 311 preferably has a thickness of 15 nm or more and 100 nm or less. The first layer 310 with a thickness of 15 nm or more and 100 nm or less can function as an interference film and have a sufficient antireflection effect. The first layer 311 preferably has a thickness of 20 nm or more and 70 nm or less, more preferably 25 nm or more and 50 nm or less.

The first layer 311 in the present embodiment can be the same organic layer as the second layer 112 in the first embodiment.

When the first layer 311 is an organic layer and the second layer 312 is an inorganic compound layer, as described above, the coating liquid for forming the second layer 312 can be continuously applied without performing the curing step after the coating liquid for forming the first layer 311 is applied.

The mixture layer 401 has a thickness of 2 nm or more and less than 15 nm, depending on the components and combination of the coating liquids used and the production process. The mixture layer 401 with a thickness of less than 15 nm does not affect the optical interference layer. In consideration of improvement in adhesion strength between the layers, the mixture layer preferably has a thickness of 5 nm or more and less than 15 nm. The thickness of the mixture layer 401 can be reduced by performing a step of removing part of the organic solvent contained in the coating liquid 12 before the step of applying the coating liquid 11.

### (Method for Producing Optical Interference Layer)

A method for producing an optical interference layer according to the present embodiment includes the following steps.
(1) Step of preparing substrate
(2) Step of applying first coating liquid to substrate to form first coating film
(3) Step of applying second coating liquid to first coating film to form second coating film
(4) Step of curing second coating film
(5) Step of applying third coating liquid to cured second coating film to form third coating film
(6) Step of curing third coating film

The method for producing an optical interference layer according to the present embodiment has many points in common with the first embodiment and is therefore described while omitting the overlapping matters.

### (1) Step of preparing substrate

As in the first embodiment, the substrate 300 may be prepared.

### (2) Step of applying first coating liquid to substrate to form first coating film

The coating liquid 12 of the first embodiment can be used as a first coating liquid 21 (hereinafter referred to as a coating liquid 21) for forming the first layer 311. The step of applying the coating liquid 21 can be performed in the same manner as for the coating liquid 11 in the first embodiment.

### (3) Step of applying second coating liquid to first coating film to form second coating film

The coating liquid 11 of the first embodiment can be used as a second coating liquid 22 (hereinafter referred to as a coating liquid 22) for forming the second layer 312. The step of applying the coating liquid 22 can be performed in the same manner as for the coating liquid 12 in the first embodiment.

### (4) Step of curing second coating film

The second coating liquid 22 has a high affinity for a third coating liquid for forming a third layer to be applied thereafter, and the second coating film formed by the application of the coating liquid 22 is therefore cured before the application of the third coating liquid.

The second coating film can be cured in the same manner as in the step of curing the third coating film in the first embodiment but is preferably cured by performing a heat treatment at 50°C or more and 200°C or less because the time required for the production can be shortened.

### (5) Step of applying third coating liquid to cured second coating film to form third coating film

The coating liquid 13 of the first embodiment can be used as a third coating liquid 23 (hereinafter referred to as a coating liquid 23) for forming the third layer 313.

The step of applying the coating liquid 23 can be performed in the same manner as in the application of the coating liquid 13 in the first embodiment.

### (6) Step of curing third coating film

The step of curing the third coating film can be performed in the same manner as the step of curing the third coating film in the first embodiment.

### <Fourth Embodiment>

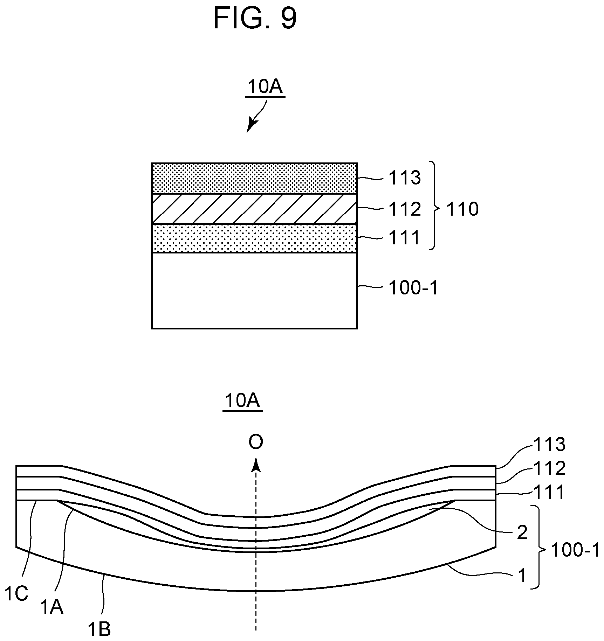

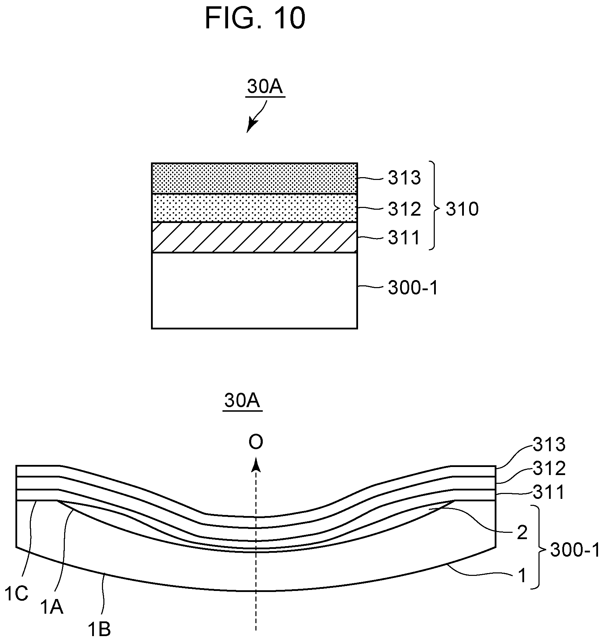

Fig. 9 is a schematic view of a member according to a fourth embodiment and is a configuration example of an optical element including a replica element (aspheric lens) as a substrate with an optical interference layer. Fig. 10 illustrates a modification example. Figs. 9 and 10 illustrate an optical element including an optical interference layer on the replica element.

A member 10A according to the fourth embodiment differs in the substrate from the member 10 according to the second embodiment. The member 10A according to the fourth embodiment includes a first layer 111, a second layer 112, and a third layer 113 sequentially stacked on a substrate 100-1.

### (Substrate)

The substrate 100-1 has an aspheric surface in contact with the first layer 111. The substrate 100-1 has a transparent member 1 and a resin-cured product 2. An adhesive layer may be provided between the transparent member 1 and the resin-cured product 2 to enhance the adhesion therebetween, or the transparent member 1 may be surface-treated with a silane coupling agent.

The transparent member 1 has a first surface 1A and a second surface 1B, which are optical surfaces. The first surface 1A is a spheric surface, and the optical axis passes through the center O thereof. A flat surface 1C, which is a surface perpendicular or almost perpendicular to the optical axis, is provided at the outer periphery of the first surface 1A. The first surface 1A of the transparent substrate is one of a light incident surface and a light emitting surface, and the second surface 1B of the transparent substrate is the other of the light incident surface and the light emitting surface.

The transparent member 1 may be formed of a transparent resin or transparent glass. In the present description, the term "transparent" means that the light transmittance in the wavelength range of 400 nm or more and 780 nm or less is 10% or more. The transparent member 1 is preferably formed of glass, for example, common optical glass, such as silicate glass, borosilicate glass, or phosphate glass, quartz glass, or glass ceramic.

Although the first surface 1A has a concave shape and the second surface 1B has a convex shape in Fig. 9, the transparent member 1 may have any shape. The shape of the surface of the transparent member 1 in contact with the cured product 2 can be selected from a concave surface, a convex surface, an axisymmetric aspheric surface, a flat surface, and the like in accordance with desired characteristics. The transparent member 1 preferably has a circular shape when viewed from above in Fig. 5A. This is because the accuracy of assembly is improved when the member 10A is used as a lens in the optical system of the third embodiment.

### (Cured Product)

The cured product 2 is provided in close contact with the first surface 1A of the transparent member. It may be provided on the flat surface 1C but may not be provided on the flat surface 1C. The cured product 2 is a cured product of a resin composition produced by polymerization or copolymerization of the resin composition.

The resin composition contains a first material, a second material, and a polymerization initiator. The first material is a polymer produced by polymerization of a material containing a monofunctional (meth)acrylate monomer. The second material is a monomer of the monofunctional (meth)acrylate. The cured product 2 has a (meth)acrylate compound that is a cured product of the resin composition.

The optical interference layer 110 described in the first embodiment is formed on the substrate 100-1.

In Fig. 9, the thickness of the cured product 2 is not uniform in the plane of the first surface 1A. That is, the surface of the cured product 2 on the side not in contact with the transparent member 1 has an aspherical shape. In the present embodiment, the thickness distribution has the minimum thickness d1 near the center O of the element through which the optical axis passes, and has the maximum thickness d2 at the periphery of the element, but an aspheric surface may not have this shape. For example, the thickness distribution may have the maximum thickness d2 near the center O of the element and the minimum thickness d1 at the periphery of the element. The ratio of the maximum thickness d2 to the minimum thickness d1 of the cured product 2 is preferably in the range of more than 1 and 30 or less. More than 30 may result in lower surface accuracy at the time of cure shrinkage due to a large difference in the thickness of the cured product 2. It is more preferably 8 or more. The minimum thickness d1 is preferably 300 µm or less, and the maximum thickness d2 is preferably in the range of 10 µm or more and 1000 µm or less.

The cured product 2 on the transparent member 1 preferably has a water absorption expansion coefficient of less than 0.30%. This is because the change in optical characteristics due to water absorption expansion can be reduced. A water absorption expansion coefficient of 0.30% or more may result in a large change in the surface profile of the cured product 2 due to water absorption and may result in a change in image quality in an optical system. Thus, it is preferably 0.23% or less, more preferably 0.19% or less. The water absorption expansion coefficient can be evaluated by placing the member 10A in a thermo-hygrostat at a temperature of 40°C and a humidity of 90% for 16 hours and measuring the surface profile of the cured product 2 with a profile measuring instrument 20 minutes after taking out the member 10A in a room temperature environment (23°C ± 2°C).

The thickness of the first layer 111 on the flat surface 1C is preferably larger than the thickness on the center O of the first surface 1A. This is to enhance the adhesion between the first layer 111 and the transparent member 1 at the flat surface 1C.

The thickness of the second layer 112 on the flat surface 1C is preferably larger than the thickness on the center O of the first surface 1A. This is to enhance the adhesion between the second layer 112 and the first layer 111 at the flat surface 1C.

The thickness of the third layer 113 on the flat surface 1C is preferably larger than the thickness on the center O of the first surface 1A. This is to enhance the adhesion between the third layer 113 and the first layer 112 at the flat surface 1C.

Fig. 10 is a modification example of the fourth embodiment, and the optical interference layer 310 described in the third embodiment is formed on a substrate 300-1. The substrate 300-1 and the substrate 100-1 are the same.

The thickness of the first layer 311 on the flat surface 1C is preferably larger than the thickness on the center O of the first surface 1A. This is to enhance the adhesion between the first layer 311 and the transparent member 1 at the flat surface 1C.

The thickness of the second layer 312 on the flat surface 1C is preferably larger than the thickness on the center O of the first surface 1A. This is to enhance the adhesion between the second layer 312 and the first layer 311 at the flat surface 1C.

The thickness of the third layer 313 on the flat surface 1C is preferably larger than the thickness on the center O of the first surface 1A. This is to enhance the adhesion between the third layer 313 and the first layer 312 at the flat surface 1C.

### (Second Exemplary Embodiment)

As described below, a coating liquid for forming each layer constituting the optical interference layer was sequentially applied to a substrate to produce a member according to each of the exemplary embodiments and the comparative examples and evaluate the member.

### <Production of Member>

The following flat glass and spherical lens with a concave surface were prepared as substrates, and in the following exemplary embodiments and comparative examples, an optical interference layer was provided on each substrate to produce a member having an optical interference layer. Table 1 shows the glass type and the refractive index of the substrate used in each of the exemplary embodiments and comparative examples.
Flat glass 1: a single-side polished article with a φ of 30 mm and a thickness of 1 mm
Flat glass 2: a double-side polished article with a φ of 30 mm and a thickness of 1 mm
Spherical lens 1: φ 30 mm, radius of curvature 18.4 mm, center thickness 2 mm
Aspheric lens 1: φ 30 mm, radius of curvature 18.4 mm, center thickness 2 mm

An optical interference layer was formed on a polished surface of the flat glass 1, on one polished surface of the flat glass 2, and on a concave surface of each of the spherical lens 1 and the aspheric lens 1. The coating liquid for forming each layer was applied by a spin coating method.

Members thus produced were evaluated by the following methods.

### <Evaluation of Film Thickness of Member>

To evaluate the thickness of each layer in the members, the flat glass 1 was set in a high-speed spectroscopic ellipsometer (M-2000 manufactured by J. A. Woollam Japan), the incident angle was changed in the range of 50 degrees to 70 degrees, and the thickness was calculated from measurement results.

### <Evaluation of Reflectance of Member>

The reflectance of normal incident light at a half-opening angle of 30 degrees of the central portion of the flat glass 1 and a spherical glass was measured with a reflectometer (USPM-RU III manufactured by Olympus Corporation). The average reflectances of the flat glass 1 and the spherical glass in the visible light region (400 to 700 nm) were calculated and evaluated according to the following criteria.
A: The average reflectance is 0% or more and 0.2% or less
B: The average reflectance is more than 0.2% and 0.6% or less
C: The average reflectance is more than 0.6%

A member rated A or B was determined to have a good antireflection effect.

### <Evaluation of Scattering of Member>

The scattering of members was evaluated as described below. An illuminometer (T-10M manufactured by Konica Minolta Sensing) was installed in a substrate holder, and the illumination intensity of white light was adjusted while measuring the illuminance so that the illuminance in the vertical direction on the surface of the substrate was 4000 lux.

Next, a member including an optical interference layer on the flat glass 2 was installed in a substrate holder so that white light was emitted from the optical interference layer side. The installed member was inclined at 45 degrees and was photographed with a camera (lens: EF50 mm F2.5 Compact Macro manufactured by CANON KABUSHIKI KAISHA, camera: EOS-70D manufactured by CANON KABUSHIKI KAISHA) in the direction normal to the surface on which the optical interference layer was not provided. The imaging conditions of the camera were ISO 400, white balance: fair weather, diaphragm: 10, and a shutter speed: 10 seconds. The average luminance of four positions in 700 pixels x 700 pixels in a captured image was calculated as a scattering value. The scattering value was evaluated according to the following criteria.
A: The scattering value is 0 or more and 15 or less
B: The scattering value is 15 or more and 25 or less
C: The scattering value is 25 or more

A member rated A or B was determined to have low scattering by the optical interference layer and have favorable characteristics as an optical member.

### <Evaluation of Strength of Member>

A polyester wiper (Alpha Wiper TX1009 manufactured by Texwipe) was pressed against the surface of the optical interference layer provided on the polished surface of the flat glass 1 and was reciprocated 50 times under a load of 300 g/cm2, and the appearance was then evaluated with an optical microscope. The evaluation criteria were as follows:
A: Almost no change in appearance is observed
B: A small change in appearance is observed, and a minute linear scratch or the like is observed
C: A significant change in appearance is observed, and a linear scratch or peeling is observed

The rating A was judged to be very high strength, and the rating B was judged to be high strength without problems.

### <Evaluation of Reflection at Periphery of Curved Surface>

A spherical lens provided with an optical interference layer was visually observed to evaluate reflection at the periphery. The term "periphery", as used herein, refers to a region with a width of 2 mm along the outer edge of the concave surface. The reflection was evaluated according to the following criteria.
A: Reflection at the periphery is hardly noticeable
B: Reflection at the periphery is noticeable
C: Reflection at the periphery is highly noticeable

Those rated A have almost no change in appearance from the central portion to the periphery of the lenses and are considered to have a high antireflection effect. Those rated B are inferior to those rated A but are considered to have a sufficient antireflection effect. Those rated C are considered to have an insufficient antireflection effect.

### <Evaluation of Reliability under High Temperature and High Humidity>

A member having an optical interference layer was exposed to a high-temperature and high-humidity environment of 60°C and 90% for 1000 hours to evaluate the change in reflectance and the appearance. The change in reflectance was evaluated according to the following criteria.
A: Almost no change in reflectance is observed
B: A slight change in reflectance is observed
C: A large change in reflectance is observed

The appearance was evaluated according to the following criteria.
A: Almost no change in appearance is observed
B: A small change in appearance is observed, and a minute linear scratch or the like is observed
C: A significant change in appearance is observed, and a linear scratch or peeling is observed

Those rated A have almost no change in the optical characteristics or appearance from the central portion to the periphery of the lenses and are considered to have high reliability. Those rated B are inferior to those rated A but are considered to have sufficient reliability. Those rated C are considered to have insufficient reliability.

Exemplary embodiments and comparative examples are more specifically described below.

### [Exemplary Embodiment 1]

### (Coating Liquid 1a for Forming First Layer)

PGM-ST manufactured by Nissan Chemical Industries, Ltd. (particle size: 10 nm, solid concentration: 30% by mass) was used as a propylene glycol monomethyl ether dispersion liquid of spherical solid silica (silicon oxide) particles. 1-propoxy-2-propanol was added to 100 g of the propylene glycol monomethyl ether dispersion liquid of the solid silica particles at a solid concentration of 3.8% by mass.

In a separate vessel, 13.82 g of ethanol and an aqueous nitric acid (concentration: 3%) were added to 12.48 g of ethyl silicate and were stirred at room temperature for 10 hours to prepare a silica sol 1 (solid concentration: 11.5% by mass). Gas chromatography showed that no components of the raw material ethyl silicate remained.

The silica sol 1 was added to the dispersion liquid of the solid silica particles so that the ratio of the silica particles to the silica sol component was 25:3. Furthermore, mixing by stirring at room temperature for 2 hours yielded a coating liquid 1a containing the solid silica particles.

### (Coating Liquid 2a for Forming Second Layer)

Hexane was gradually added under reflux to 200 g of 4,4'-methylenebis(aminocyclohexane) (hereinafter referred to as DADCM, manufactured by Tokyo Chemical Industry Co., Ltd.) to completely dissolve the DADCM. After stopping heating and standing at room temperature for several days, a precipitate was filtered off and dried under reduced pressure. 58 g of an alicyclic diamine DADCM was produced as a white solid.

12 mmol in total of three types of diamines, that is, an alicyclic diamine DADCM, an aromatic diamine 4,4'-bis(4-aminophenoxy)biphenyl (product name BODA: manufactured by Wakayama Seika Kogyo Co., Ltd.), and a siloxane-containing diamine 1,3-bis(3-aminopropyl)tetramethyldisiloxane (product name PAM-E: manufactured by Shin-Etsu Chemical Co., Ltd.) were dissolved in N,N-dimethylacetamide (hereinafter referred to as DMAc).

Approximately 12 mmol of an acid dianhydride was added to the diamine solution during water cooling. The acid dianhydride was 4-(2,5-dioxotetrahydrofuran-3-yl)-1,2,3,4-tetrahydronaphthalene-1,2-dicarboxylic anhydride (product name TDA-100: manufactured by New Japan Chemical Co., Ltd.). The amount of DMAc was adjusted so that the total mass of the diamines and the acid dianhydride was 20% by weight.

This solution was stirred at room temperature for 15 hours to cause a polymerization reaction. After the solution was diluted with DMAc to 8% by weight, 7.4 ml of pyridine and 3.8 ml of acetic anhydride were added thereto, and the solution was stirred at room temperature for 1 hour. The solution was stirred in an oil bath in the temperature range of 60°C to 70°C for 4 hours. A polymer was collected from the polymerization solution by reprecipitation in methanol and was washed with methanol several times. After drying at 60°C for 24 hours, a white to light yellow polyimide powder was produced.

The polyimide was dissolved in cyclohexanone at a solid concentration of 2.5% by mass to produce a coating liquid 2a.

### (Coating Liquid 3a for Forming Third Layer)

1-propoxy-2-propanol was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.7% by mass.

The silica sol 1 was added thereto so that the mass ratio of the hollow silica particles to the silica sol component was 100:11. Furthermore, mixing by stirring at room temperature for 2 hours yielded a coating liquid 3a containing the hollow silica particles.

### (Formation of Optical Interference Layer)

A coating film was formed from the coating liquid 1a on a substrate made of synthetic silica, and a coating film was then continuously formed from the coating liquid 2a without curing the coating film of the coating liquid 1a. Furthermore, without curing the coating film of the coating liquid 2a, a coating film was continuously formed from the coating liquid 3a. The coating film formed from each of the coating liquids 1a, 2a, and 3a was dried and cured at room temperature for 24 hours to produce a member 1. Each layer of the member 1 had a thickness of 30 nm, 27 nm, and 129 nm in order from the substrate.

### [Exemplary Embodiment 2]

### (Coating Liquid 1b for Forming First Layer)

PGM-ST manufactured by Nissan Chemical Industries, Ltd. (particle size: 10 nm, solid concentration: 30% by mass) was used as a propylene glycol monomethyl ether dispersion liquid of spherical solid silica particles. Ethyl lactate was added to 100 g of the propylene glycol monomethyl ether dispersion liquid of the solid silica particles at a solid concentration of 3.8% by mass.

The silica sol 1 was added thereto so that the mass ratio of the solid silica particles to the silica sol component was 5:1. Furthermore, mixing by stirring at room temperature for 2 hours yielded a coating liquid 1b containing the solid silica particles.

### (Coating Liquid 2b for Forming Second Layer)

A polyimide produced in the same manner as in the coating liquid 2a was dissolved in cyclopentanone at a solid concentration of 2.5% by mass to prepare a coating liquid 2b.

### (Coating Liquid 3b for Forming Third Layer)

1-propoxy-2-propanol was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.7% by mass.

The silica sol 1 was added thereto so that the mass ratio of the hollow silica particles to the silica sol component was 100:9. Furthermore, mixing by stirring at room temperature for 2 hours yielded a coating liquid 3b containing the hollow silica particles.

### (Formation of Optical Interference Layer)

A coating film was formed from the coating liquid 1b on a substrate made of synthetic silica, and a coating film was then continuously formed from the coating liquid 2b without curing the coating film of the coating liquid 1b. Furthermore, without curing the coating film of the coating liquid 2b, a coating film was continuously formed from the coating liquid 3b. The coating film formed from each of the coating liquids 1b, 2b, and 3b was dried and cured at room temperature for 24 hours to produce a member 2. Each layer of the member 2 had a thickness of 33 nm, 28 nm, and 130 nm in order from the substrate.

### [Exemplary Embodiment 3]

### (Coating Liquid 1c for Forming First Layer)

IPA-ST (particle size: 10 nm, solid concentration: 15% by mass) manufactured by Nissan Chemical Industries, Ltd. was used as an isopropyl alcohol dispersion liquid of chain silica particles. 1-propoxy-2-propanol was added to 100 g of the isopropyl alcohol dispersion liquid of the chain silica particles at a solid concentration of 3.6% by mass.

The silica sol 1 was added thereto so that the ratio of the chain silica particles to the silica sol component was 5:1. Furthermore, mixing by stirring at room temperature for 2 hours yielded a coating liquid 1c containing the chain silica particles.

### (Coating Liquid 2c for Forming Second Layer)

Hexane was gradually added under reflux to 200 g of 4,4'-methylenebis(aminocyclohexane) (hereinafter referred to as DADCM, manufactured by Tokyo Chemical Industry Co., Ltd.) to completely dissolve the DADCM. After stopping heating and standing at room temperature for several days, a precipitate was filtered off and dried under reduced pressure. 50 g of an alicyclic diamine DADCM was produced as a white solid.

12 mmol in total of three types of diamines, that is, an alicyclic diamine DADCM, an aromatic diamine 4,4'-bis(4-aminophenoxy)biphenyl (product name BODA: manufactured by Wakayama Seika Kogyo Co., Ltd.), and a siloxane-containing diamine 1,3-bis(3-aminopropyl)tetramethyldisiloxane (product name PAM-E: manufactured by Shin-Etsu Chemical Co., Ltd.) were dissolved in DMAc.

Approximately 12 mmol of an acid dianhydride was added to the diamine solution during water cooling. The acid dianhydride was 4-(2,5-dioxotetrahydrofuran-3-yl)-1,2,3,4-tetrahydronaphthalene-1,2-dicarboxylic anhydride (product name TDA-100: manufactured by New Japan Chemical Co., Ltd.) (This is an exemplary embodiment, so please describe one that was actually used.). The amount of DMAc was adjusted so that the total mass of the diamines and the acid dianhydride was 20% by weight.

This solution was stirred at room temperature for 15 hours to cause a polymerization reaction. After the solution was diluted with DMAc to 8% by weight, 7.4 ml of pyridine and 3.8 ml of acetic anhydride were added thereto, and the solution was stirred at room temperature for 1 hour. The solution was stirred in an oil bath in the temperature range of 60°C to 70°C for 4 hours. A polymer was collected from the polymerization solution by reprecipitation in methanol and was washed with methanol several times. After drying at 60°C for 24 hours, a white to light yellow polyimide powder was produced.

The polyimide was dissolved in a 7:3 mixed solvent of cyclohexanone and cyclopentanone at a solid concentration of 2.5% by mass to prepare a coating liquid 2c.

### (Coating Liquid 3c for Forming Third Layer)

3-methoxy-1-butanol was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.7% by mass.

The silica sol 1 was added thereto so that the mass ratio of the hollow silica particles to the silica sol component was 100:13. Furthermore, mixing by stirring at room temperature for 2 hours yielded a coating liquid 3c containing the hollow silica particles.

### (Formation of Optical Interference Layer)

The coating liquid 1c was applied to a substrate made of synthetic silica to form a coating film, and a coating film was then continuously formed from the coating liquid 2c without curing the coating film of the coating liquid 1c. Furthermore, without curing the coating film of the coating liquid 2c, a coating film was continuously formed from the coating liquid 3c. The coating film formed from each of the coating liquids 1c, 2c, and 3c was dried and cured at room temperature for 24 hours to produce a member 3. Each layer of the member 3 had a thickness of 26 nm, 29 nm, and 132 nm in order from the substrate side.

### [Exemplary Embodiment 4]

### (Coating Liquid 1d for Forming First Layer)

PGM-ST manufactured by Nissan Chemical Industries, Ltd. (particle size: 10 nm, solid concentration: 30% by mass) was used as a propylene glycol monomethyl ether dispersion liquid of spherical solid silica particles. Ethyl lactate was added to 100 g of the propylene glycol monomethyl ether dispersion liquid of the solid silica particles at a solid concentration of 3.2% by mass.

The silica sol 1 was added thereto so that the mass ratio of the solid silica particles to the silica sol component was 100:7. Furthermore, mixing by stirring at room temperature for 2 hours yielded a coating liquid 1d containing the solid silica particles.

### (Coating Liquid 2d for Forming Second Layer)

A polyimide produced in the same manner as in the coating liquid 2a was dissolved in cyclohexanone at a solid concentration of 2.0% by mass to prepare a coating liquid 2d.

### (Coating Liquid 3d for Forming Third Layer)

Ethyl lactate was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.9% by mass.

The silica sol 1 was added thereto so that the mass ratio of the silica particles to the silica sol component was 100:11. Furthermore, mixing by stirring at room temperature for 2 hours yielded a coating liquid 3d containing the hollow silica particles.

### (Formation of Optical Interference Layer)

The coating liquid 1d was applied to a substrate made of synthetic silica to form a coating film, and a coating film was then continuously formed from the coating liquid 2d without curing the coating film of the coating liquid 1c. Furthermore, without curing the coating film of the coating liquid 2d, a coating film was continuously formed from the coating liquid 3d. The coating film formed from each of the coating liquids 1d, 2d, and 3d was dried and cured at room temperature for 24 hours to produce a member 4. Each layer of the member 4 had a thickness of 32 nm, 25 nm, and 132 nm in order from the substrate side.

### [Exemplary Embodiment 5]

### (Coating Liquid 1e for Forming First Layer)

Hexane was gradually added under reflux to 200 g of 4,4'-methylenebis(aminocyclohexane) (hereinafter referred to as DADCM, manufactured by Tokyo Chemical Industry Co., Ltd.) to completely dissolve the DADCM. After stopping heating and standing at room temperature for several days, a precipitate was filtered off and dried under reduced pressure. 60 g of purified DADCM was produced as a white solid.

12 mmol in total of three types of diamines, that is, an alicyclic diamine DADCM, an aromatic diamine 4,4'-bis(4-aminophenoxy)biphenyl (product name BODA: manufactured by Wakayama Seika Kogyo Co., Ltd.), and a siloxane-containing diamine 1,3-bis(3-aminopropyl)tetramethyldisiloxane (product name PAM-E: manufactured by Shin-Etsu Chemical Co., Ltd.) were dissolved in DMA.

Approximately 12 mmol of an acid dianhydride was added to the diamine solution during water cooling. The acid dianhydride was 4-(2,5-dioxotetrahydrofuran-3-yl)-1,2,3,4-tetrahydronaphthalene-1,2-dicarboxylic anhydride (product name TDA-100: manufactured by New Japan Chemical Co., Ltd.). The amount of DMAc was adjusted so that the total mass of the diamines and the acid dianhydride was 20% by weight.

This solution was stirred at room temperature for 15 hours to cause a polymerization reaction. After the solution was diluted with DMAc to 8% by weight, 7.4 ml of pyridine and 3.8 ml of acetic anhydride were added thereto, and the solution was stirred at room temperature for 1 hour. The solution was stirred in an oil bath in the temperature range of 60°C to 70°C for 4 hours. A polymer was collected from the polymerization solution by reprecipitation in methanol and was washed with methanol several times. After drying at 60°C for 24 hours, a white to light yellow polyimide powder was produced.

The polyimide was dissolved in cyclohexanone at a solid concentration of 2.2% by mass to produce a coating liquid 1e.

### (Coating Liquid 2e for Forming Second Layer)

PGM-ST manufactured by Nissan Chemical Industries, Ltd. (particle size: 10 nm, solid concentration: 30% by mass) was used as a propylene glycol monomethyl ether dispersion liquid of spherical solid silica particles. Ethyl lactate was added to 100 g of the propylene glycol monomethyl ether dispersion liquid of the solid silica particles at a solid concentration of 3.3% by mass.

The silica sol 1 was added thereto so that the mass ratio of the solid silica particles to the silica sol component was 10:3. Furthermore, mixing by stirring at room temperature for 2 hours yielded a coating liquid 2e containing the solid silica particles.

### (Coating Liquid 3e for Forming Third Layer)

Ethyl lactate was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.8% by mass.

The silica sol 1 was added thereto so that the mass ratio of the hollow silica particles to the silica sol component was 100:11. Furthermore, mixing by stirring at room temperature for 2 hours yielded a coating liquid 3e containing the hollow silica particles.

### (Formation of Optical Interference Layer)

The coating liquid 1e was applied to a substrate made of synthetic silica to form a coating film, and a coating film was then continuously formed from the coating liquid 2e without curing the coating film of the coating liquid 1e. The coating films of the coating liquids 1e and 2e were then cured by heating at 50°C for 30 minutes, and a coating film was then formed from the coating liquid 3e. The coating film formed from the coating liquid 3e was then dried and cured at room temperature for 24 hours to produce a member 5. Each layer of the member 5 had a thickness of 20 nm, 54 nm, and 94 nm in order from the substrate side.

### [Exemplary Embodiment 6]

### (Coating Liquid 1f for Forming First Layer)

An alumina sol solution was prepared by dissolving aluminum-sec-butoxide [Al(O-sec-Bu)3] in 2-propanol [IPA], adding ethyl acetoacetate [EAcAc] as a stabilizer, and stirring the mixture at room temperature for approximately 3 hours. The solution had a mole ratio Al(O-sec-Bu)3:IPA:EAcAc of 1:20:1. 0.01 mol/L of diluted hydrochloric acid was then added to the solution, and the solution was stirred at room temperature for 3 hours to prepare a coating liquid 1f as an alumina sol.

### (Coating Liquid 2f for Forming Second Layer)

A polyimide produced in the same manner as in the coating liquid 2a was dissolved in cyclohexanone at a solid concentration of 2.3% by mass to prepare a coating liquid 2f.

### (Coating Liquid 3f for Forming Third Layer)

1-propoxy-2-propanol was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.5% by mass.

The silica sol 1 was added thereto so that the mass ratio of the silica particles to the silica sol component was 25:2. Furthermore, mixing by stirring at room temperature for 2 hours yielded a coating liquid 3f containing the hollow silica particles.

### (Formation of Optical Interference Layer)

The coating liquid 1f was applied to a substrate made of synthetic silica to form a coating film, and a coating film was then continuously formed from the coating liquid 2f without curing the coating film of the coating liquid 1f. Furthermore, without curing the coating film of the coating liquid 2f, a coating film was continuously formed from the coating liquid 3f. The coating film formed from each of the coating liquids 1f, 2f, and 3f was dried and cured at room temperature for 24 hours to produce a member 6. Each layer of the member 6 had a thickness of 23 nm, 53 nm, and 97 nm in order from the substrate side.

### [Exemplary Embodiment 7]

### (Coating Liquid 1g for Forming First Layer)

A polyimide produced in the same manner as in the coating liquid 2a was dissolved in cyclohexanone at a solid concentration of 2.9% by mass to prepare a coating liquid 1g.

### (Coating Liquid 2g for Forming Second Layer)

An alumina sol solution was prepared by dissolving aluminum-sec-butoxide [Al(O-sec-Bu)3] in 2-propanol [IPA], adding ethyl acetoacetate [EAcAc] as a stabilizer, and stirring the mixture at room temperature for approximately 3 hours. The solution had a mole ratio Al(O-sec-Bu)3:IPA:EAcAc of 1:20:1. 0.01 mol/L of diluted hydrochloric acid was then added to the solution, and the solution was stirred at room temperature for 3 hours to prepare a coating liquid 1g as an alumina sol.

### (Coating Liquid 3g for Forming Third Layer)

1-propoxy-2-propanol was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.5% by mass.

The silica sol 1 was added thereto so that the mass ratio of the hollow silica particles to the silica sol component was 25:2. Furthermore, mixing by stirring at room temperature for 2 hours yielded a coating liquid 3g containing the hollow silica particles.

### (Formation of Optical Interference Layer)

The coating liquid 1g was applied to a substrate made of S-LAH65V to form a coating film, and a coating film was then continuously formed from the coating liquid 2g without curing the coating film of the coating liquid 1g. The coating films of the coating liquids 1g and 2g were then cured by heating at 50°C for 30 minutes, and a coating film was then formed from the coating liquid 3g. The coating film formed from the coating liquid 3g was then dried and cured at room temperature for 24 hours to produce a member 7. Each layer of the member 7 had a thickness of 44 nm, 49 nm, and 98 nm in order from the substrate side.

### [Exemplary Embodiment 8]

### (Coating Liquid 1h for Forming First Layer)

PGM-ST manufactured by Nissan Chemical Industries, Ltd. (particle size: 10 nm, solid concentration: 30% by mass) was used as a propylene glycol monomethyl ether dispersion liquid of spherical solid silica particles. Ethyl lactate was added to 100 g of the propylene glycol monomethyl ether dispersion liquid of the solid silica particles at a solid concentration of 3.2% by mass.

The silica sol 1 was added thereto so that the mass ratio of the solid silica particles to the silica sol component was 10:3. Furthermore, mixing by stirring at room temperature for 2 hours yielded a coating liquid 1h containing the solid silica particles.

### (Coating Liquid 2h for Forming Second Layer)

A polyimide produced in the same manner as in the coating liquid 2a was dissolved in cyclohexanone at a solid concentration of 2.8% by mass to prepare a coating liquid 2h.

### (Coating Liquid 3h for Forming Third Layer)

Ethyl lactate was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.9% by mass.

The silica sol 1 was added thereto so that the mass ratio of the silica particles to the silica sol component was 100:9. Furthermore, mixing by stirring at room temperature for 2 hours yielded a coating liquid 3h containing the hollow silica particles.

### (Formation of Optical Interference Layer)

The coating liquid 1h was applied to a substrate made of synthetic silica to form a coating film, and a coating film was then continuously formed from the coating liquid 2h without curing the coating film of the coating liquid 1h. Furthermore, without curing the coating film of the coating liquid 2h, a coating film was continuously formed from the coating liquid 3h. The coating film formed from each of the coating liquids 1h, 2h, and 3h was dried and cured at room temperature for 24 hours to produce a member 8. Each layer of the member 8 had a thickness of 25 nm, 49 nm, and 129 nm in order from the substrate side.

### [Exemplary Embodiment 9]

### (Coating Liquid 1i for Forming First Layer)

PGM-ST manufactured by Nissan Chemical Industries, Ltd. (particle size: 10 nm, solid concentration: 30% by mass) was used as a propylene glycol monomethyl ether dispersion liquid of spherical solid silica particles. Ethyl lactate was added to 100 g of the propylene glycol monomethyl ether dispersion liquid of the solid silica particles at a solid concentration of 3.2% by mass.

The silica sol 1 was added thereto so that the mass ratio of the solid silica particles to the silica sol component was 10:3. Furthermore, mixing by stirring at room temperature for 2 hours yielded a coating liquid 1i containing the solid silica particles.

### (Coating Liquid 2i for Forming Second Layer)

A polyimide produced in the same manner as in the coating liquid 2a was dissolved in cyclohexanone at a solid concentration of 2.8% by mass to prepare a coating liquid 2i.

### (Coating Liquid 3i for Forming Third Layer)

Ethyl lactate was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.9% by mass.

The silica sol 1 was added thereto so that the mass ratio of the silica particles to the silica sol component was 100:9. Furthermore, mixing by stirring at room temperature for 2 hours yielded a coating liquid 3i containing the hollow silica particles.

### (Formation of Optical Interference Layer)

The coating liquid 1i was applied to a substrate made of synthetic silica to form a coating film, and a coating film was then continuously formed from the coating liquid 2i without curing the coating film of the coating liquid 1i. Furthermore, without curing the coating film of the coating liquid 2i, a coating film was continuously formed from the coating liquid 3i. The coating film formed from each of the coating liquids 1i, 2i, and 3i was dried and cured at room temperature for 24 hours to produce a member 9. Each layer of the member 9 had a thickness of 25 nm, 38 nm, and 127 nm in order from the substrate side.

### [Exemplary Embodiment 10]

### (Coating Liquid 1j for Forming First Layer)

PGM-ST manufactured by Nissan Chemical Industries, Ltd. (particle size: 10 nm, solid concentration: 30% by mass) was used as a propylene glycol monomethyl ether dispersion liquid of spherical solid silica particles. Ethyl lactate was added to 100 g of the propylene glycol monomethyl ether dispersion liquid of the solid silica particles at a solid concentration of 3.2% by mass.

The silica sol 1 was added thereto so that the mass ratio of the solid silica particles to the silica sol component was 100:23. Furthermore, mixing by stirring at room temperature for 2 hours yielded a coating liquid 1j containing the solid silica particles.

### (Coating Liquid 2j for Forming Second Layer)

A polyimide produced in the same manner as in the coating liquid 2a was dissolved in cyclohexanone at a solid concentration of 2.7% by mass to prepare a coating liquid 2j.

### (Coating Liquid 3j for Forming Third Layer)

PGM-ST manufactured by Nissan Chemical Industries, Ltd. (particle size: 10 nm, solid concentration: 30% by mass) was used as a propylene glycol monomethyl ether dispersion liquid of spherical solid silica particles. Ethyl lactate was added to 100 g of the propylene glycol monomethyl ether dispersion liquid of the solid silica particles at a solid concentration of 5.4% by mass.

The silica sol 1 was added thereto so that the mass ratio of the solid silica particles to the silica sol component was 10:1. Furthermore, mixing by stirring at room temperature for 2 hours yielded a coating liquid 1j containing the solid silica particles.

### (Formation of Optical Interference Layer)

The coating liquid 1j was applied to a substrate made of synthetic silica to form a coating film, and a coating film was then continuously formed from the coating liquid 2j without curing the coating film of the coating liquid 1j. Furthermore, without curing the coating film of the coating liquid 2k, a coating film was continuously formed from the coating liquid 3j. The coating film formed from each of the coating liquids 1j, 2j, and 3j was dried and cured at room temperature for 24 hours to produce a member 10. Each layer of the member 10 had a thickness of 30 nm, 44 nm, and 118 nm in order from the substrate side.

### [Exemplary Embodiment 11]

### (Coating Liquid 1k for Forming First Layer)

PL-1 (particle size: 15 nm, solid concentration: 12% by mass) manufactured by Fuso Chemical Co., Ltd. was used as an aqueous dispersion liquid of cocoon-like silica particles. Ethyl lactate was added to 100 g of the aqueous dispersion liquid of the cocoon-like silica particles at a solid concentration of 1.0% by mass. Dodecafluorosuberic acid was added thereto so that the mass ratio of the cocoon-like silica particles to the acid component was 100:1.

The silica sol 1 was added thereto so that the mass ratio of the cocoon-like silica particles to the silica sol component was 100:23. Furthermore, mixing by stirring at room temperature for 2 hours yielded a coating liquid 1k containing the solid silica particles.

### (Coating Liquid 2k for Forming Second Layer)

A polyimide produced in the same manner as in the coating liquid 2a was dissolved in cyclohexanone at a solid concentration of 2.9% by mass to prepare a coating liquid 2k.

### (Coating Liquid 3k for Forming Third Layer)

Ethyl lactate was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.9% by mass. The silica sol 1 was added thereto so that the mass ratio of the silica particles to the silica sol component was 100:9. Furthermore, mixing by stirring at room temperature for 2 hours yielded a coating liquid 3k containing the hollow silica particles.

### (Formation of Optical Interference Layer)

The coating liquid 1k was applied to form a coating film on a replica lens (an aspheric lens in which a resin-cured product containing a (meth)acrylate compound with a center thickness of 50 µm and a maximum thickness of 1 mm at an end portion was provided on the surface of an S-LAH98 glass serving as a base material), and a coating film was then continuously formed from the coating liquid 2k without curing the coating film of the coating liquid 1k. Furthermore, without curing the coating film of the coating liquid 2k, a coating film was continuously formed from the coating liquid 3k. The coating film formed from each of the coating liquids 1k, 2k, and 3k was dried and cured at room temperature for 24 hours to produce a member 11. Each layer of the member 11 had a thickness of 16 nm, 70 nm, and 117 nm in order from the substrate side.

### [Exemplary Embodiment 12]

### (Coating Liquid 1l for Forming First Layer)

PGM-ST manufactured by Nissan Chemical Industries, Ltd. (particle size: 10 nm, solid concentration: 30% by mass) was used as a propylene glycol monomethyl ether dispersion liquid of spherical solid silica particles. Ethyl lactate was added to 100 g of the propylene glycol monomethyl ether dispersion liquid of the solid silica particles at a solid concentration of 1.2% by mass.

The silica sol 1 was added thereto so that the mass ratio of the solid silica particles to the silica sol component was 100:23. Furthermore, mixing by stirring at room temperature for 2 hours yielded a coating liquid 1l containing the solid silica particles.

### (Coating Liquid 2l for Forming Second Layer)

A polyimide produced in the same manner as in the coating liquid 2a was dissolved in cyclohexanone at a solid concentration of 2.9% by mass to prepare a coating liquid 2l.

### (Coating Liquid 3l for Forming Third Layer)

Ethyl lactate was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.9% by mass.

The silica sol 1 was added thereto so that the mass ratio of the silica particles to the silica sol component was 100:9. Furthermore, mixing by stirring at room temperature for 2 hours yielded a coating liquid 3l containing the hollow silica particles.

### (Formation of Optical Interference Layer)

The coating liquid 1l was applied to form a coating film on a replica lens (an aspheric lens in which a resin-cured product containing a (meth)acrylate compound with a center thickness of 50 µm and a maximum thickness of 1 mm at an end portion was provided on the surface of an S-LAH98 glass serving as a base material), and a coating film was then continuously formed from the coating liquid 2l without curing the coating film of the coating liquid 1l. Furthermore, without curing the coating film of the coating liquid 2l, a coating film was continuously formed from the coating liquid 3l. The coating film formed from each of the coating liquids 1l, 2l, and 3l was dried and cured at room temperature for 24 hours to produce a member 12. Each layer of the member 12 had a thickness of 15 nm, 71 nm, and 117 nm in order from the substrate side.

### [Comparative Example 1]

### (Coating Liquid 1m for Forming First Layer)

A polyimide produced in the same manner as in the coating liquid 2a was dissolved in propylene glycol monomethyl ether acetate at a solid concentration of 1.5% by mass to prepare a coating liquid 1m.

### (Coating Liquid 2m for Forming Second Layer)

A polyimide produced in the same manner as in the coating liquid 2a was dissolved in cyclopentanone at a solid concentration of 2.5% by mass to prepare a coating liquid 2m.

### (Coating Liquid 3m for Forming Third Layer)

Ethyl lactate was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.5% by mass.

The silica sol 1 was added thereto so that the mass ratio of the hollow silica particles to the silica sol component was 100:13. Furthermore, mixing by stirring at room temperature for 2 hours yielded a coating liquid 3m containing the hollow silica particles.

### (Formation of Optical Interference Layer)

The coating liquid 1j was applied to a substrate made of synthetic silica to form a coating film, and a coating film was then continuously formed from the coating liquid 2j without curing the coating film of the coating liquid 1j. Furthermore, without curing the coating film of the coating liquid 2j, a coating film was continuously formed from the coating liquid 3j. The coating film formed from each of the coating liquids 1j, 2j, and 3j was dried and cured at room temperature for 24 hours to produce a member 13.

### [Comparative Example 2]

### (Coating Liquid 4)

Ethyl lactate was added to 200 g of an isopropyl alcohol dispersion liquid of hollow silica particles (Thrulya 4110 manufactured by JGC Catalysts and Chemicals Ltd., average particle size: approximately 60 nm, shell thickness: approximately 12 nm, solid concentration: 20.5% by mass) to adjust the solid concentration to 3.9% by mass.

The silica sol 1 was added thereto so that the mass ratio of the hollow silica particles to the silica sol component was 100:13. Furthermore, mixing by stirring at room temperature for 2 hours yielded a coating liquid 4 containing the hollow silica particles.

### (Formation of Optical Interference Layer)

The coating liquid 4 was applied to form a coating film on a substrate made of synthetic silica and was dried and cured at room temperature for 24 hours or more to produce a member 14 having an optical interference layer composed of one layer.

### [Comparative Example 3]

A total of four layers of aluminum oxide (Al₂O₃) and tantalum pentoxide (Ta₂O₅) were alternately stacked on a substrate made of S-LAH65V by a vacuum deposition method. The coating liquid 4 was dropped thereon to form a coating film by a spin coating method, thereby producing a member 15.

### [Comparative Example 4]

A total of four layers of silicon dioxide (SiO₂) and titanium oxide (TiO₂) were alternately stacked on a replica lens (an aspheric lens in which a resin-cured product containing a (meth)acrylate compound with a center thickness of 50 µm and a maximum thickness of 1 mm at an end portion was provided on the surface of an S-LAH98 glass serving as a base material) by a vacuum deposition method to produce a member 16.

Table 4 shows the evaluation results of Exemplary Embodiments 1 to 12 and Comparative Examples 1 to 4 together with the materials and the refractive indices of the first layer, the second layer, and the third layer.

**[Table 4]**

| | Substrate | | First layer | | Second layer | | Third layer | | Evaluation results | | | | | | |
|---|---|---|---|---|---|---|---|---|---|---|---|---|---|---|---|
| | Type of glass | Refractive index | Material | Refractive index | Material | Refractive index | Material | Refractive index | Reflectance | | Scattering | Strength | Reflection at outer periphery of curved surface | Reliability (high temperature and high humidity) | |
| | | | | | | | | | Half-opening angle 0 degrees | Half-opening angle 30 degrees | | | | Change in reflectance | Appearance |
| Exemplary embodiment 1 | Synthetic silica | 1.46 | Spherical silicon oxide particles | 1.28 | Polyimide | 1.62 | Hollow silicon oxide particles | 1.19 | A | A | A | A | A | A | A |
| Exemplary embodiment 2 | Synthetic silica | 1.46 | Spherical silicon oxide particles | 1.30 | Polyimide | 1.63 | Hollow silicon oxide particles | 1.18 | A | B | A | A | A | A | A |
| Exemplary embodiment 3 | Synthetic silica | 1.46 | Chain silicon oxide particles | 1.22 | Polyimide | 1.62 | Hollow silicon oxide particles | 1.19 | A | A | A | A | A | A | A |
| Exemplary embodiment 4 | Synthetic silica | 1.46 | Spherical silicon oxide particles | 1.28 | Polyimide | 1.64 | Hollow silicon oxide particles | 1.19 | A | A | A | A | A | A | A |
| Exemplary embodiment 5 | Synthetic silica | 1.46 | Polyimide | 1.62 | Spherical silicon oxide particles | 1.36 | Hollow silicon oxide particles | 1.19 | A | B | B | A | A | A | A |
| Exemplary embodiment 6 | Synthetic silica | 1.46 | Alumina | 1.52 | Polyimide | 1.64 | Hollow silicon oxide particles | 1.19 | A | B | A | A | A | A | A |
| Exemplary embodiment 7 | S-LAH65V | 1.80 | Polyimide | 1.64 | Alumina | 1.52 | Hollow silicon oxide particles | 1.18 | B | B | A | B | B | A | A |
| Exemplary embodiment 8 | S-LAH65V | 1.80 | Spherical silicon oxide particles | 1.40 | Polyimide | 1.63 | Hollow silicon oxide particles | 1.18 | B | B | A | A | B | A | A |
| Exemplary embodiment 9 | L-BAL42 | 1.58 | Spherical silicon oxide particles | 1.26 | Polyimide | 1.62 | Hollow silicon oxide particles | 1.19 | A | B | A | B | B | A | B |
| Exemplary embodiment 10 | Synthetic silica | 1.46 | Spherical silicon oxide particles | 1.35 | Polyimide | 1.62 | Spherical silicon oxide particles | 1.23 | B | B | B | A | B | A | A |
| Exemplary embodiment 11 | S-LAH98 (Replica) | 1.95 | Cocoon-like silicon oxide particles | 1.34 | Polyimide | 1.62 | Hollow silicon oxide particles | 1.19 | A | B | B | B | A | A | B |
| Exemplary embodiment 12 | S-LAH98 (Replica) | 1.95 | Spherical silicon oxide particles | 1.35 | Polyimide | 1.62 | Hollow silicon oxide particles | 1.19 | A | B | B | B | A | B | B |
| Comparative example 1 | Synthetic silica | 1.46 | Polyimide | 1.60 | Polyimide | 1.63 | Hollow silicon oxide particles | 1.19 | C | C | B | A | C | A | A |
| Comparative example 2 | Synthetic silica | 1.46 | - | - | - | - | Hollow silicon oxide particles | 1.19 | C | C | B | A | C | A | A |
| Comparative example 3 | S-LAH65V | 1.80 | Vapor-deposited film multilayer | - | - | - | Hollow silicon oxide particles | 1.19 | A | C | A | B | C | B | B |
| Comparative example 4 | S-LAH98 (Replica) | 1.95 | Vapor-deposited film multilayer | - | - | - | - | - | C | C | A | B | C | C | B |

The results of Table 4 showed that the members of Exemplary Embodiments 1 to 12 had good antireflection performance on the entire surface regardless of the type of the substrate or the shape of the surface on which the optical interference layer was provided. It was also confirmed that the mechanical characteristics were also good.

In contrast, all the members of Comparative Examples 1 to 3 had large reflection at a half-opening angle of 30 degrees or at the periphery of the curved surface and had poor antireflection performance on the entire surface. In particular, Comparative Example 3, in which an optical interference layer composed of a multilayer film formed by the vapor deposition method and a porous layer formed by the coating method was provided, had a high antireflection effect in the central portion of the curved surface but had noticeable reflection at the periphery. Furthermore, Comparative Example 4, in which an optical interference layer formed of a multilayer film formed by the vapor deposition method was provided on the replica lens, had a significant change in optical performance in a high-temperature and high-humidity environment.

A member according to the present invention can be used for optical applications, such as various optical lenses, microlenses, and glasses for liquid crystal panels.

The present invention is not limited to these embodiments, and various changes and modifications may be made therein without departing from the spirit and scope of the present invention. Accordingly, the following claims are attached to make the scope of the present invention public.

This application claims the benefit of Japanese Patent Application No. 2022-174677 filed October 31, 2022, Japanese Patent Application No. 2022-174676 filed October 31, 2022, and Japanese Patent Application No. 2023-176912 filed October 12, 2023, which are hereby incorporated by reference herein in their entirety.

## Claims

1. A member comprising: a substrate; and an optical interference layer provided on at least one main surface side of the substrate and constituted by at least two layers,
wherein the optical interference layer includes a first layer and a porous layer containing particles of an inorganic compound in this order from the substrate side.

2. The member according to Claim 1, wherein
the optical interference layer includes the first layer, a second layer, and the porous layer containing the particles of the inorganic compound in this order from the substrate side,
any one of the first layer and the second layer is an organic layer, and the other is an inorganic compound layer.

3. The member according to Claim 1 or 2, wherein the porous layer containing the particles of the inorganic compound has a refractive index of 1.10 or more and 1.23 or less.

4. The member according to any one of Claims 1 to 3, wherein the porous layer containing the particles of the inorganic compound has a refractive index of 1.15 or more and 1.20 or less.

5. The member according to any one of Claims 1 to 4, wherein the porous layer containing the particles of the inorganic compound contains a plurality of particles of an inorganic compound bound to each other with an inorganic compound binder and has voids between the plurality of particles of the inorganic compound.

6. The member according to any one of Claims 1 to 5, wherein the particles of the inorganic compound are hollow or chain silica particles.

7. The member according to Claim 6, wherein the particles of the inorganic compound are bound together by a binder of a silicon oxide compound.

8. The member according to any one of Claims 1 to 7, wherein the particles of the inorganic compound are hydrophobized.

9. The member according to Claim 8, wherein the inorganic compound has a fluoromethyl group or a methyl silyl group on a surface thereof.

10. The member according to Claim 1, wherein
the optical interference layer provided on the main surface side is two layers, and
the first layer has a refractive index of 1.35 or more and 2.00 or less.

11. The member according to Claim 10, wherein the first layer has a thickness of 30 nm or more and 130 nm or less.

12. The member according to Claim 10, wherein the first layer has a thickness of 50 nm or more and 100 nm or less.

13. The member according to any one of Claims 10 to 12, wherein the first layer is an organic layer.

14. The member according to Claim 13, wherein the organic layer contains a resin with an aromatic ring or an imide ring in a main chain thereof or contains a maleimide copolymer.

15. The member according to Claim 13, wherein the organic layer comprises a structure represented by the following general formula.
(-SiR₂-O-)ₘ

16. The member according to any one of Claims 10 to 15, wherein the first layer contains the particles of the inorganic compound, and the particles of the inorganic compound in the first layer enter the porous layer containing the particles of the inorganic compound.

17. The member according to Claim 16, wherein the particles of the inorganic compound in the first layer enters the porous layer containing the particles of the inorganic compound to a depth of 2 nm or more and less than 15 nm.

18. The member according to any one of Claims 10 to 17, wherein
the main surface has a curvature, and
the first layer and the particles of the inorganic compound contained in the first layer each have a thickness that increases from a central portion to an outer periphery of the main surface.

19. The member according to Claim 18, wherein a ratio of a thickness of the optical interference layer in the outer periphery to the thickness of the optical interference layer in the central portion is 1.0 or more and 1.2 or less.

20. The member according to any one of Claims 10 to 19, wherein the porous layer containing the particles of the inorganic compound has a thickness of 50 nm or more and 300 nm or less.

21. The member according to any one of Claims 10 to 19, wherein the porous layer containing the particles of the inorganic compound has a thickness of 90 nm or more and 150 nm or less.

22. The member according to Claim 2, wherein the inorganic compound of the first layer or the second layer is any one selected from the group consisting of aluminum oxide, zirconium oxide, silicon oxide, titanium oxide, and zinc oxide.

23. The member according to Claim 2 or 22, wherein the first layer is the inorganic compound layer, and the second layer is the organic layer.

24. The member according to Claim 23, wherein the first layer has a refractive index of 1.10 or more and 1.60 or less, and the second layer has a refractive index of 1.55 or more and 2.00 or less.

25. The member according to any one of Claims 2 and 22 to 24, wherein a first mixture layer containing a component contained in the first layer and a component contained in the second layer is provided between the first layer and the second layer, and a second mixture layer containing a component contained in the first layer and a component contained in the second layer is provided between the second layer and the porous layer containing the particles of the inorganic compound.

26. The member according to Claim 25, wherein the first mixture layer and the second mixture layer have a thickness of 2 nm or more and less than 15 nm.

27. The member according to Claim 2 or 22, wherein the first layer is the organic layer, and the second layer is the inorganic compound layer.

28. The member according to Claim 27, wherein the first layer has a refractive index of 1.55 or more and 2.00 or less, and the second layer has a refractive index of 1.25 or more and 1.65 or less.

29. The member according to Claim 27 or 28, wherein a mixture layer containing a component contained in the first layer and a component contained in the second layer is provided between the first layer and the second layer.

30. The member according to Claim 29, wherein the mixture layer has a thickness of 2 nm or more and less than 15 nm.

31. The member according to any one of Claims 2 and 22 to 30, wherein the substrate has a curved main surface, and the three layers in the optical interference layer have an increasing thickness from a central portion to a periphery of the main surface.

32. The member according to any one of Claims 1 to 31, wherein
the substrate includes a transparent substrate with a spherical first surface and contains a cured product of a resin, and
the cured product is provided in an aspherical shape on the first surface.

33. The member according to Claim 32, wherein the cured product comprises a (meth)acrylate compound.

34. The member according to Claim 32 or 33, wherein a ratio of a maximum thickness d2 to a minimum thickness d1 of the cured product is more than 1 and 30 or less.

35. The member according to any one of Claims 32 to 34, wherein
the transparent substrate has a flat surface on an outer periphery of the first surface, and
the first layer has a larger thickness on the flat surface than on a center of the spheric surface.

36. An optical apparatus comprising: a housing; and an optical system in the housing, wherein
at least one optical element constituting the optical system is the member according to any one of Claims 1 to 35.

37. The optical apparatus according to Claim 36, further comprising an imaging element that receives light passing through the optical system.
